# EUROPEAN PATENT APPLICATION

(11) **EP 4 501 710 A1**
(43) Date of publication of application: **05.02.2025**
(21) Application number: 23780216.0
(22) Date of filing: 24.03.2023
(51) Int. Cl.: B60R 11/02, G06Q 50/10, G06F 3/01

(54) **CONTENT PRESENTATION SYSTEM, CONTENT PRESENTATION PROGRAM, AND CONTENT PRESENTATION METHOD**

(30) Priority: 31.03.2022 JP 2022059425
(71) Applicant: Sony Group Corporation, Tokyo 108-0075 (JP)
(72) Inventor: IHARA, Tetsugoro, Tokyo 108-0075 (JP)
(74) Representative: MFG Patentanwälte Meyer-Wildhagen Meggle-Freund Gerhard PartG mbB
(86) International application number: PCT/JP2023/011936
(87) International publication number: WO 2023/190206

(57) **Abstract**

A content presentation system (200) includes: a sensor (25) mounted on a vehicle (1) and adapted to achieve a condition constituting a tour including movement of the vehicle (1); and an HMI (31) mounted on the vehicle (1) and configured to present content corresponding to the condition when the condition is achieved.

## Description

### Field

The present disclosure relates to a content presentation system, a content presentation program, and a content presentation method.

### Background

For example, as disclosed in Patent Literature 1 and Patent Literature 2, there have been disclosed technologies of presenting content such as an image to a user in a vehicle.

### Citation List

### Patent Literature

Patent Literature 1: JP 2021-151504 A
Patent Literature 2: JP 6102117 B2

### Summary

### Technical Problem

Sensing technology and human machine interface (HMI) technology in vehicles have been improving. There is room for examination of content presentation technologies in an unprecedented new mode.

One aspect of the present disclosure provides a new technology of content presentation.

### Solution to Problem

A content presentation system according to one aspect of the present disclosure includes: a sensor mounted on a vehicle and adapted to achieve a condition constituting a tour including movement of the vehicle; and a human machine interface (HMI) mounted on the vehicle and configured to present content corresponding to the condition when the condition is achieved.

A content presentation program according to one aspect of the present disclosure causes a computer to execute processing of causing an HMI to present, when a condition is achieved based on a detection result of a sensor mounted on a vehicle and adapted to achieve the condition constituting a tour including movement of the vehicle, content corresponding to the condition.

A content presentation method according to one aspect of the present disclosure includes causing an HMI to present, when a condition is achieved based on a detection result of a sensor mounted on a vehicle and adapted to achieve the condition constituting a tour including movement of the vehicle, content corresponding to the condition.

### Brief Description of Drawings

FIG. 1 is a diagram illustrating an example of a schematic configuration of a vehicle 1.
FIG. 2 is a diagram illustrating an example of sensing regions sensed by devices included in an external recognition sensor 25, such as a camera 51, a radar 52, a LiDAR 53, and an ultrasonic sensor 54.
FIG. 3 is a diagram illustrating an example of a schematic configuration of a content presentation system 200 according to an embodiment.
FIG. 4 is a diagram illustrating an example of a tour DB 932.
FIG. 5 is a diagram schematically illustrating tour A.
FIG. 6 is a diagram illustrating an example of conditions.
FIG. 7 is a diagram schematically illustrating an example of achievement of conditions.
FIG. 8 is a diagram schematically illustrating an example of achievement of conditions.
FIG. 9 is a diagram schematically illustrating an example of achievement of conditions.
FIG. 10 is a diagram schematically illustrating an example of achievement of conditions.
FIG. 11 is a diagram schematically illustrating an example of achievement of conditions.
FIG. 12 is a diagram schematically illustrating an example of achievement of conditions.
FIG. 13 is a diagram schematically illustrating an example of achievement of conditions.
FIG. 14 is a diagram schematically illustrating an example of achievement of conditions.
FIG. 15 is a diagram illustrating an example of materials of content.
FIG. 16 is a diagram schematically illustrating an example of content presentation.
FIG. 17 is a diagram illustrating an example of content presentation.
FIG. 18 is a diagram illustrating an example of content presentation.
FIG. 19 is a diagram schematically illustrating an example of content presentation.
FIG. 20 is a diagram schematically illustrating an example of content presentation.
FIG. 21 is a diagram schematically illustrating an example of a display region of visual content.
FIG. 22 is a diagram schematically illustrating an example of a display region of visual content.
FIG. 23 is a diagram schematically illustrating an example of a display region of visual content.
FIG. 24 is a diagram schematically illustrating an example of a display region of visual content.
FIG. 25 is a diagram schematically illustrating an example of a display region of visual content.
FIG. 26 is a diagram schematically illustrating an example of a display region of visual content.
FIG. 27 is a flowchart illustrating an example of processing (content presentation method) executed in the content presentation system 200.
FIG. 28 is a diagram illustrating an example of the tour DB 932.
FIG. 29 is a diagram schematically illustrating tour D viewed on a time axis.
FIG. 30 is a diagram illustrating an example of the tour DB 932.
FIG. 31 is a diagram schematically illustrating tour E.
FIG. 32 is a view schematically illustrating an example of tour D viewed on a time axis.
FIG. 33 is a view illustrating an example of production of tours and materials.
FIG. 34 is a diagram illustrating an example of a material DB 933.
FIG. 35 is a diagram illustrating an example of a hardware configuration of the device.

### Description of Embodiments

Embodiments of the present disclosure will be described below in detail with reference to the drawings. Note that, in each of the following embodiments, the same elements are denoted by the same reference symbols, and a repetitive description thereof will be omitted.

Hereinafter, modes for carrying out the present technology will be described. Description will be given in the following order.
0. Introduction
1. Example of configuration of vehicle
2. Embodiments
3. Modifications
3.1. Example of presentation of content corresponding to condition set
3.2. Example of combined use of mobile terminal
3.3. Example of tour production
3.4. Others
4. Hardware configuration example
5. Exemplary effects

### 0. Introduction

Patent Literature 1 discloses a technique of providing a game program that can recognize, from a host vehicle being an automatic driving vehicle or the like, vehicle information of another vehicle from image data captured by an imaging unit of the host vehicle and drawing a game image corresponding to the recognized vehicle information so as to display the another vehicle as a game image in a real landscape, enabling increasing realistic feeling. In addition, Patent Literature 2 discloses a technique of reproducing a spatial sense of realism in a specific place and providing an immersive feeling in an immersive car based on environmental information acquired by a sensor group disposed in the specific place.

The improvement in technology will make it possible, for example, to perform in-vehicle use of a sensing technology capable of highly accurate image recognition, an HMI technology capable of presenting content by augmented reality (AR), and the like. According to the technology in the disclosure, it is possible to perform presentation of content in an unprecedented new mode.

### 1. Example of configuration of vehicle

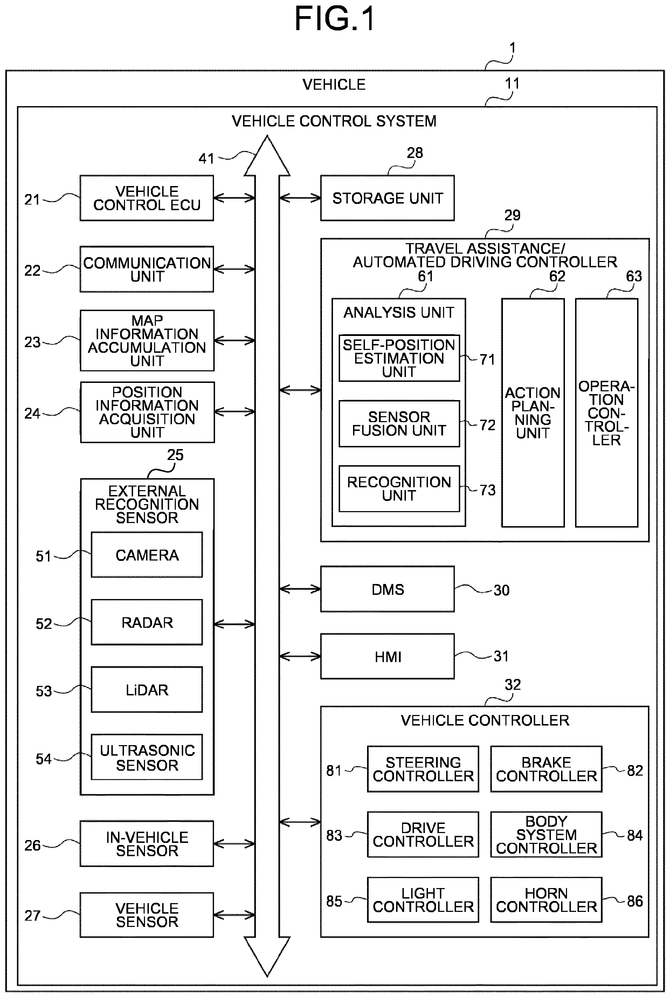

FIG. 1 is a diagram illustrating an example of a schematic configuration of a vehicle 1. A vehicle control system 11 is mounted on the vehicle 1 and controls the vehicle 1. The vehicle control system 11 includes a vehicle control Electronic Control Unit (ECU) 21, a communication unit 22, a map information accumulation unit 23, a position information acquisition unit 24, an external recognition sensor 25, an in-vehicle sensor 26, a vehicle sensor 27, a storage unit 28, a travel assistance/automated driving controller 29, a Driver Monitoring System (DMS) 30, a Human Machine Interface (HMI) 31, and a vehicle controller 32. These parts are communicably connected to each other via a communication network 41.

The communication network 41 includes, for example, an in-vehicle communication network, a bus, or the like conforming to a digital bidirectional communication standard such as a Controller Area Network (CAN), a Local Interconnect Network (LIN), a Local Area Network (LAN), FlexRay (registered trademark), and Ethernet (registered trademark). The communication network 41 may be selectively used depending on the type of data to be transmitted. For example, it is allowable to apply CAN to data related to vehicle control, and apply Ethernet to large-capacity data.

Individual portions of the vehicle control system 11 may be directly connected to each other without intervening the communication network 41, for example, by using wireless communication that assumes communication at a relatively short distance, such as near field communication (NFC) or Bluetooth (registered trademark).

The vehicle control ECU 21 includes various processors such as a Central Processing Unit (CPU) and a Micro Processing Unit (MPU), for example. The vehicle control ECU 21 controls the entire vehicle control system 11 or controls some functions of the vehicle control system 11.

The communication unit 22 communicates with various devices inside and outside the vehicle, other vehicles, servers, base stations, and the like, and transmits and receives various types of data. The communication unit 22 may perform communication using a plurality of communication schemes.

Some examples of communication with the outside of the vehicle by the communication unit 22 will be described. The communication unit 22 may communicate with a server or the like existing on an external network (hereinafter, referred to as an external server) via a base station or an access point by a wireless communication scheme such as 5th generation (5G) mobile communication system), Long Term Evolution (LTE), or Dedicated Short Range Communications (DSRC). Examples of the external network include the Internet, a cloud network, and an organization-specific network. The communication scheme is not particularly limited, and may be, for example, a wireless communication scheme capable of performing digital bidirectional communication at a communication speed of a predetermined speed or more and at a distance of a predetermined distance or more.

The communication unit 22 may communicate with a terminal present in the vicinity of the host vehicle using a peer to peer (P2P) technology. Examples of such a terminal include: a terminal worn by a mobile body moving at a relatively low speed, such as a pedestrian or a bicycle; a terminal installed at a fixed position such as a store, or a Machine Type Communication (MTC) terminal. The communication unit 22 may perform V2X communication. Examples of the V2X communication include Vehicle to Vehicle communication with another vehicle, Vehicle to Infrastructure communication with a roadside device or the like, Vehicle to Home communication, and Vehicle to Pedestrian communication with a terminal or the like possessed by a pedestrian.

The communication unit 22 may receive, from the outside (Over The Air), a program for updating software that controls the operation of the vehicle control system 11. The communication unit 22 may further receive information such as map information, traffic information, and surrounding information of the vehicle 1 from the outside.

The communication unit 22 may transmit, to the outside, information such as information related to the vehicle 1 and surrounding information of the vehicle 1. Examples of the information to be transmitted include data indicating the state of the vehicle 1, a recognition result obtained by a recognition unit 73 described below. The communication unit 22 may perform communication corresponding to a vehicle emergency call system such as an e-Call.

The communication unit 22 may receive an electromagnetic wave transmitted by a road traffic information communication system (Vehicle Information and Communication System (VICS) (registered trademark), such as a radio wave beacon, an optical beacon, or FM multiplex broadcasting.

Some examples of communication with internal portions of the vehicle by the communication unit 22 will be described. The communication unit 22 may communicate with each device in the vehicle by using wireless communication, for example. The wireless communication may be wireless communication using a communication scheme capable of performing digital bidirectional communication at a communication speed of a predetermined speed or more. Examples of such wireless communication include wireless LAN, Bluetooth, NFC, and wireless USB (WUSB).

The communication unit 22 may communicate with each device in the vehicle by wired communication via a cable connected to a connection terminal (not illustrated). The wired communication may be wired communication using a communication scheme capable of performing digital bidirectional communication at a communication speed of a predetermined speed or more. Examples of such wired communication include Universal Serial Bus (USB), High-Definition Multimedia Interface (HDMI) (registered trademark), and Mobile High-definition Link (MHL).

The in-vehicle device may be a device not connected to the communication network 41 in the vehicle. Examples of the device include a mobile terminal and a wearable device carried by an occupant such as a driver, an information device brought into the vehicle and temporarily installed.

The map information accumulation unit 23 accumulates at least either one of a map acquired from the outside or a map created by the vehicle 1. Examples of the map to be accumulated include maps such as a three-dimensional high-precision map and a global map having lower precision and covering a wider area than the high-precision map.

Examples of the high-precision map include a dynamic map, a point cloud map, and a vector map. The dynamic map is a map including four layers of dynamic information, semi-dynamic information, semi-static information, and static information, and is provided to the vehicle 1 from an external server or the like. The point cloud map is a map including point clouds (point cloud data). The vector map is, for example, a map in which traffic information such as a lane and a position of a traffic light is associated with a point cloud map and adapted to an Advanced Driver Assistance System (ADAS) or Autonomous Driving (AD).

The point cloud map and the vector map may be provided from an external server or the like, or may be created by the vehicle 1 as a map for performing matching with a local map to be described below based on a sensing result from the camera 51, the radar 52, the LiDAR 53, or the like, and may be accumulated in the map information accumulation unit 23. In a case where a high-precision map is provided from an external server or the like, for example, map data of several hundred meters square regarding a planned path of the vehicle 1 for future travel is acquired from the external server or the like in order to reduce the communication traffic.

The position information acquisition unit 24 functions as a device such as a position sensor configured to receive a global navigation satellite system (GNSS) signal from a GNSS satellite and acquire position information of the vehicle 1. The acquired position information is supplied to the travel assistance/automated driving controller 29. The position information may be acquired using a scheme other than the scheme using the GNSS signal, for example, using a beacon.

The external recognition sensor 25 includes various sensors used for recognizing a situation outside the vehicle 1, and supplies sensor data from the individual sensors to individual portions of the vehicle control system 11. The type and number of sensors included in the external recognition sensor 25 can be optionally determined.

In this example, the external recognition sensor 25 includes a camera 51, a radar 52, a Light Detection and Ranging, Laser Imaging Detection and Ranging (LiDAR) 53, and an ultrasonic sensor 54. A sensor other than the exemplified sensor may be included in the external recognition sensor 25. The sensing region of each sensor will be described below.

An image capturing scheme of the camera 51 is not particularly limited. For example, cameras of various image capturing schemes, such as a time of flight (ToF) camera, a stereo camera, a monocular camera, and an infrared camera, being schemes capable of distance measurement, are used as the camera 51 as necessary. The camera 51 may be a camera that simply acquires a captured image regardless of distance measurement.

The external recognition sensor 25 may include an environment sensor for detecting an environment for the vehicle 1.

The environment sensor detects an environment such as weather, weather, and brightness. Examples of the environmental sensor include a raindrop sensor, a fog sensor, a sunshine sensor, a snow sensor, and an illuminance sensor.

The external recognition sensor 25 may include a microphone used for purposes such as detecting a sound around the vehicle 1 or the position of a sound source.

The in-vehicle sensor 26 detects in-vehicle information. Sensor data of the in-vehicle sensor 26 is supplied to each portion of the vehicle control system 11. Examples of the in-vehicle sensor 26 include a camera, a radar, a seating sensor, a steering wheel sensor, a microphone, a biometric sensor, and the like. Examples of the camera include cameras of various image capturing schemes capable of measuring a distance, such as a ToF camera, a stereo camera, a monocular camera, and an infrared camera. The camera may be a camera that simply acquires a captured image regardless of distance measurement. The biometric sensor is installed at positions such as a seat and a steering wheel to detect various types of biometric information of the occupant such as the driver.

The vehicle sensor 27 detects the state of the vehicle 1. Sensor data of the vehicle sensor 27 is supplied to each portion of the vehicle control system 11. For example, the vehicle sensor 27 may include a speed sensor, an acceleration sensor, an angular velocity sensor (gyro sensor), and an Inertial Measurement Unit (IMU) integrating these sensors. The vehicle sensor 27 may include a steering angle sensor that detects a steering angle of a steering wheel, a yaw rate sensor, an accelerator sensor that detects an operation amount of an accelerator pedal, and a brake sensor that detects an operation amount of a brake pedal. The vehicle sensor 27 may include a rotation sensor that detects the rotation speed of the engine or the motor, an air pressure sensor that detects the air pressure of the tire, a slip rate sensor that detects the slip rate of the tire, and a wheel speed sensor that detects the rotation speed of the wheel. The vehicle sensor 27 may include a battery sensor that detects the remaining amount and temperature of the battery, and an impact sensor that detects an external impact.

The storage unit 28 includes at least either one of a nonvolatile storage medium or a volatile storage medium, and stores data and a program. The storage unit 28 is used as a device such as Electrically Erasable Programmable Read Only Memory (EEPROM) and Random Access Memory (RAM). Examples of the storage medium include a magnetic storage device such as a hard disc drive (HDD), a semiconductor storage device, an optical storage device, and a magneto-optical storage device. The storage unit 28 stores various programs, data, and the like used by individual portions of the vehicle control system 11. For example, the storage unit 28 has functions of an Event Data Recorder (EDR) and a Data Storage System for Automated Driving (DSSAD), and stores information regarding the vehicle 1 before and after an event such as an accident and information acquired by the in-vehicle sensor 26.

The travel assistance/automated driving controller 29 controls travel assistance and automated driving of the vehicle 1. In this example, the travel assistance/automated driving controller 29 includes an analysis unit 61, an action planning unit 62, and an operation controller 63.

The analysis unit 61 analyzes the situation of the vehicle 1 and the surroundings. In this example, the analysis unit 61 includes a self-position estimation unit 71, a sensor fusion unit 72, and a recognition unit 73.

The self-position estimation unit 71 estimates the self-position of the vehicle 1 based on the sensor data from the external recognition sensor 25 and the high-precision map accumulated in the map information accumulation unit 23. For example, the self-position estimation unit 71 generates a local map based on the sensor data from the external recognition sensor 25, and estimates the self-position of the vehicle 1 by matching the local map with the high-precision map. The position of the vehicle 1 is based on the center of the axle of the rear wheel pair, for example.

Examples of the local map include a three-dimensional high-precision map and an Occupancy Grid Map created using a technique such as Simultaneous Localization and Mapping (SLAM). Examples of the three-dimensional high-precision map include the above-described point cloud map. The occupancy grid map is a map in which a three-dimensional or two-dimensional space around the vehicle 1 is divided into grids (lattice) of a predetermined size, and an occupancy state of an object is indicated in units of grids. The occupancy state of the object is indicated by, for example, the presence or absence or existence probability of the object. The local map is also used for detection processing and recognition processing of a situation outside the vehicle 1 performed by the recognition unit 73, for example.

The self-position estimation unit 71 may estimate the self-position of the vehicle 1 based on the position information acquired by the position information acquisition unit 24 and the sensor data from the vehicle sensor 27.

The sensor fusion unit 72 performs sensor fusion processing of combining a plurality of different types of sensor data (for example, image data supplied from the camera 51 and sensor data supplied from the radar 52) in order to obtain new information. Examples of combination approaches include integration, fusion, and confederation.

The recognition unit 73 detects a situation outside the vehicle 1 and recognizes a situation outside the vehicle 1. For example, the recognition unit 73 performs detection processing and recognition processing regarding a situation outside the vehicle 1 based on information such as information from the external recognition sensor 25, information from the self-position estimation unit 71, and information from the sensor fusion unit 72.

Specifically, the recognition unit 73 detects and recognizes an object around the vehicle 1, for example. Examples of the detection of the object include detection of the presence or absence, size, shape, position, movement, and the like of the object. Examples of the recognition of the object include recognition of an attribute such as a type of the object, identification of a specific object, and the like. Note that the detection processing and the recognition processing are not necessarily clearly divided, and the processing may overlap each other.

For example, the recognition unit 73 performs clustering of grouping point clouds based on sensor data from the radar 52, the LiDAR 53, or the like into clusters of point clouds, thereby detecting an object around the vehicle 1. With this operation, the presence or absence, size, shape, and position of an object around the vehicle 1 are detected.

For example, the recognition unit 73 performs tracking being a follow-up operation to the motion of the cluster of the point cloud grouped by clustering, thereby detecting the motion of the object around the vehicle 1. With this operation, the speed and the traveling direction (movement vector) of the object around the vehicle 1 are detected.

For example, the recognition unit 73 detects or recognizes a vehicle, a person, a bicycle, an obstacle, a structure, a road, a traffic light, a traffic sign, a road sign, and the like based on the image data supplied from the camera 51. The recognition unit 73 may recognize the type of the object around the vehicle 1 by performing recognition processing such as semantic segmentation.

For example, the recognition unit 73 recognizes traffic rules around the vehicle 1 based on a map accumulated in the map information accumulation unit 23, self-position estimation results from the self-position estimation unit 71, and a recognition result regarding objects around the vehicle 1 obtained by the recognition unit 73. This leads to recognition of information such as the position and the state of the traffic control signal, details of the traffic sign and the road marking, details of the traffic regulation, and the travelable lane.

For example, the recognition unit 73 recognizes the surrounding environment of the vehicle 1. Examples of the surrounding environment include weather, temperature, humidity, brightness, and a state of a road surface.

The action planning unit 62 creates an action plan of the vehicle 1. For example, the action planning unit 62 creates an action plan by performing processing of path planning and path tracking. The path planning (also referred to as global path planning) is planning a rough path from the start to the goal. This path planning is also referred to as track planning, and includes processing of track generation (also referred to as local path planning) that enables safe and smooth traveling in the vicinity of the vehicle 1 in consideration of motion characteristics of the vehicle 1 along the planned path.

Path tracking is a process of planning an operation for safely and accurately traveling on a path planned by the path planning within a planned time. For example, the action planning unit 62 calculates a target speed and a target angular velocity of the vehicle 1 based on a result of path tracking.

The operation controller 63 controls the operation of the vehicle 1 in order to implement the action plan created by the action planning unit 62. For example, the operation controller 63 controls a steering controller 81, a brake controller 82, and a drive controller 83 of the vehicle controller 32 to be described below, and performs acceleration/deceleration control and direction control to allow the vehicle 1 to travel on the track calculated by the track planning. The operation controller 63 may perform cooperative control for the purpose of implementing the ADAS functions such as collision avoidance or impact mitigation, follow-up traveling, traveling under cruise control, collision warning of the host vehicle, and lane departure warning of the host vehicle. The operation controller 63 may perform cooperative control for the purpose of automated driving or the like in which the vehicle autonomously travels without depending on the operation of the driver.

The DMS 30 performs processing such as authentication of the driver and recognition of the state of the driver based on data such as sensor data from the in-vehicle sensor 26 and input data input to the HMI 31 to be described below. Examples of the state of the driver include a physical condition, a wakefulness level, a concentration level, a fatigue level, a line-of-sight direction, a drunkenness level, a driving operation, and a posture, regarding the driver.

The DMS 30 may perform authentication processing of an occupant other than the driver and recognition processing of the state of the occupant. The DMS 30 may recognize the situation inside the vehicle based on the sensor data from the in-vehicle sensor 26. Examples of the situation inside the vehicle include temperature, humidity, brightness, and odor.

The HMI 31 inputs various data, instructions, and the like, and presents various data to a driver or the like. The HMI 31 includes an input device for a person to input data, and may also function as a sensor. The HMI 31 generates an input signal based on data, an instruction, or the like input by an input device, and supplies the input signal to individual portions of the vehicle control system 11. Examples of the input device include a touch panel, a button, a switch, and a lever. The HMI 31 may be an input device capable of inputting information by a method other than manual operation, such as by voice or gesture. It is also allowable to use, as the input device, a remote control device using infrared rays or radio waves, or an external connection device such as a mobile device or a wearable device corresponding to the operation of the vehicle control system 11.

The HMI 31 generates visual information, auditory information, olfactory information, and tactile information for the occupant or the outside of the vehicle. The HMI 31 controls of output of each piece of generated information, details of the output, output timing, output method, and the like. Examples of the visual information include information indicated by images or light, such as an operation screen, a state display of the vehicle 1, a warning display, and a monitor image indicating surrounding situations of the vehicle 1. An example of the auditory information is information indicated by sounds such as voice guidance, a warning sound, and a warning message. An example of the olfactory information is information indicated by a scent emitted from a cartridge filled with perfume. An example of the tactile information is information given to the tactile sense of the occupant by force, vibration, motion, air blow, or the like.

Examples of the output device on which visual information is to be output include a display device that presents visual information by displaying an image on itself or a projector device that presents visual information based on a projected image. The display device may be a device that displays visual information in the field of view of the occupant, such as a head-up display, a transmissive display, or a wearable device having an augmented reality (AR) function, in addition to a display device having a normal display. A display device included in a navigation device, an instrument panel, a camera monitoring system (CMS), an electronic mirror, a lamp, or the like provided in the vehicle 1 may be used as the output device. Windows of the vehicle 1 may be used as an output device. A road surface illuminated with car lights may be used as an output device.

Examples of the device that outputs auditory information include an audio speaker, a headphone, and an earphone.

An example of a device that outputs tactile information is a haptic element using haptics technology. The haptic element is provided at a portion with which an occupant of the vehicle 1 comes into contact, such as a steering wheel or a seat.

The vehicle controller 32 controls each portion of the vehicle 1. In this example, the vehicle controller 32 includes a steering controller 81, a brake controller 82, a drive controller 83, a body system controller 84, a light controller 85, and a horn controller 86.

The steering controller 81 detects and controls the state of the steering system of the vehicle 1. Examples of the steering system include a steering mechanism having a steering wheel, and an electric power steering. The steering controller 81 includes components such as a steering ECU that controls the steering system, and an actuator that drives the steering system, for example.

The brake controller 82 detects and controls the state of the brake system of the vehicle 1. The brake system includes components such as a brake mechanism including a brake pedal, an antilock brake system (ABS), and a regenerative brake mechanism, for example. The brake controller 82 includes, for example, a brake ECU that controls a brake system, an actuator that drives the brake system, and the like.

The drive controller 83 detects and controls the state of the drive system of the vehicle 1. The drive system includes components such as an accelerator pedal, a driving force generation device for generating a driving force, like an internal combustion engine or a driving motor, and a driving force transmission mechanism for transmitting the driving force to wheels, for example. The drive controller 83 includes a drive ECU that controls the drive system and an actuator that drives the drive system, for example.

The body system controller 84 detects and controls the state of the body system of the vehicle 1. The body system includes components such as a keyless entry system, a smart key system, a power window device, a power seat, an air conditioner, an airbag, a seat belt, and a gear lever, for example. The body system controller 84 includes a body system ECU that controls the body system, an actuator that drives the body system, and the like.

The light controller 85 detects and controls states of various lights of the vehicle 1. Examples of the light include a headlight, a backlight, a fog light, a turn signal, a brake light, a projection, and a display of a bumper. The light controller 85 includes a light ECU that controls light, and an actuator that drives light.

The horn controller 86 detects and controls the state of the car horn of the vehicle 1. The horn controller 86 includes a horn ECU that controls a car horn, and an actuator that drives the car horn, for example.

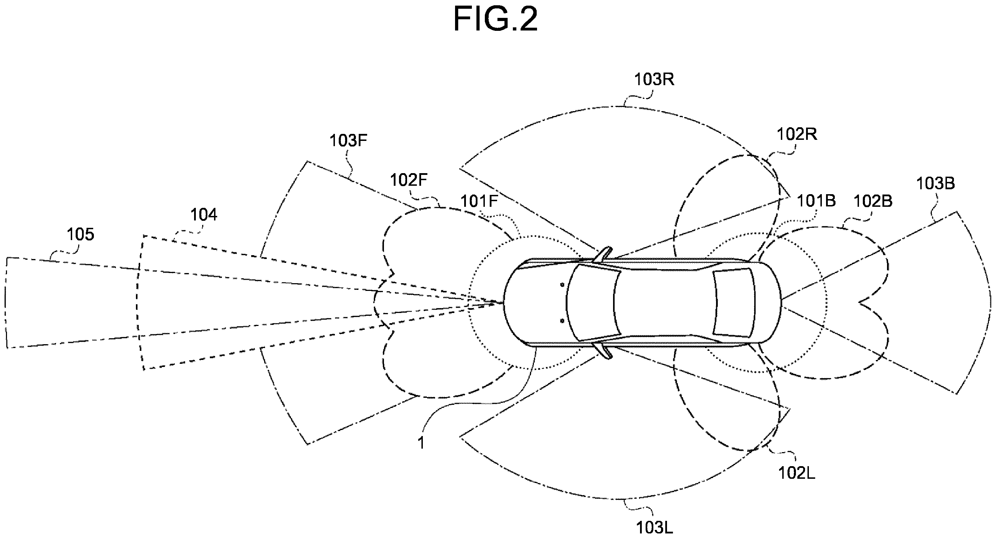

FIG. 2 is a diagram illustrating an example of sensing regions sensed by devices included in an external recognition sensor 25, such as a camera 51, a radar 52, a LiDAR 53, and an ultrasonic sensor 54. Note that FIG. 2 schematically illustrates the top view of the vehicle 1, in which the lower end side corresponds to the front end (front) side of the vehicle 1 while the upper end side corresponds to the rear end (rear) side of the vehicle 1.

A sensing region 101F and a sensing region 101B illustrate examples of sensing regions of the ultrasonic sensor 54. The sensing region 101F covers the vicinity of the front end of the vehicle 1 by the plurality of ultrasonic sensors 54. The sensing region 101B covers the vicinity of the rear end of the vehicle 1 by the plurality of ultrasonic sensors 54.

The sensing results in the sensing region 101F and the sensing region 101B are used for parking assistance of the vehicle 1, for example.

The sensing regions 102F to 102B illustrate examples of sensing regions of the radar 52 for a short distance or a middle distance. The sensing region 102F covers a position farther than the sensing region 101F in front of the vehicle 1. The sensing region 102B covers a position farther than the sensing region 101B behind the vehicle 1. The sensing region 102L covers the rear vicinity of the left side surface of the vehicle 1. The sensing region 102R covers the rear vicinity of the right side surface of the vehicle 1.

The sensing result in the sensing region 102F is used to detect a vehicle, a pedestrian, or the like existing in front of the vehicle 1, for example. The sensing result in the sensing region 102B is used for a collision prevention function behind the vehicle 1, for example. The sensing results in the sensing region 102L and the sensing region 102R are used for detecting an object in a blind spot on the sides of the vehicle 1, for example.

The sensing regions 103F to 103B illustrate examples of sensing regions covered by the camera 51. The sensing region 103F covers a position farther than the sensing region 102F in front of the vehicle 1. The sensing region 103B covers a position farther than the sensing region 102B behind the vehicle 1. The sensing region 103L covers the vicinity of the left side surface of the vehicle 1. The sensing region 103R covers the vicinity of the right side surface of the vehicle 1.

The sensing result in the sensing region 103F is used for recognition of a traffic light or a traffic sign, a lane departure prevention assist system, and an automatic headlight control system, for example. The sensing result in the sensing region 103B is used for parking assistance and a surround view system, for example. The sensing results in the sensing region 103L and the sensing region 103R can be used for a surround view system, for example.

The sensing region 104 is illustrated as an example of a sensing region of the LiDAR 53. The sensing region 104 covers a position farther than the sensing region 103F in front of the vehicle 1. In contrast, the sensing region 104 has a narrower range in the left-right direction than the sensing region 103F.

The sensing result in the sensing region 104 is used for detecting an object such as a surrounding vehicle, for example.

The sensing region 105 is illustrated as an example of a sensing region of the radar 52 for a long distance. The sensing region 105 covers a position farther than the sensing region 104 in front of the vehicle 1. In contrast, the sensing region 105 has a narrower range in the left-right direction than the sensing region 104.

The sensing result in the sensing region 105 is used for purposes such as Adaptive Cruise Control (ACC), emergency braking, and collision avoidance, for example.

Note that the sensing regions of the sensors of the camera 51, the radar 52, the LiDAR 53, and the ultrasonic sensor 54 included in the external recognition sensor 25 may have various configurations other than those in FIG. 2. For example, the ultrasonic sensor 54 may also sense the side of the vehicle 1, and the LiDAR 53 may sense the rear of the vehicle 1. In addition, the installation position of each sensor is not limited to each example described above.

### 2. Embodiments

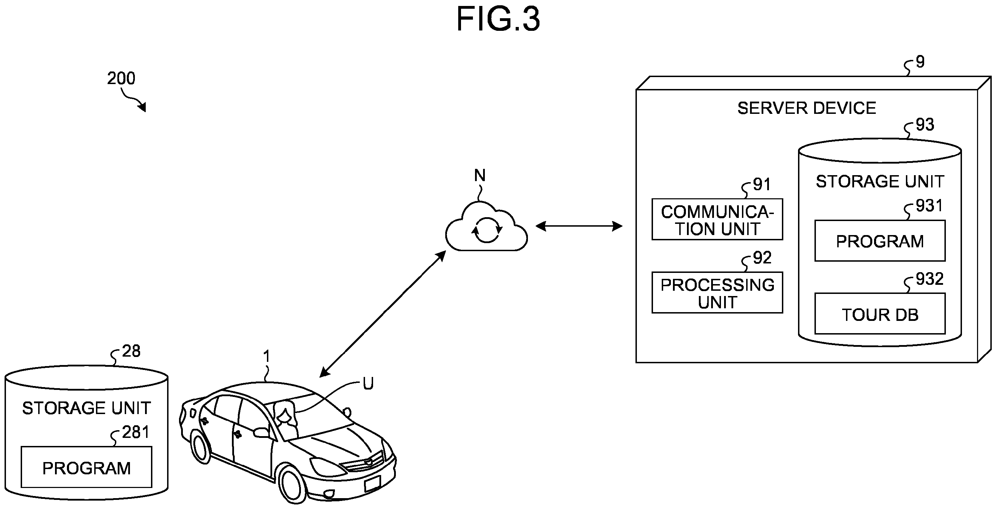

FIG. 3 is a diagram illustrating an example of a schematic configuration of a content presentation system 200 according to the embodiment. The content presentation system 200 includes the vehicle 1 and a server device 9. The vehicle 1 and the server device 9 are communicable with each other via a network N (for example, corresponding to the above-described external network).

A user of the vehicle 1 is referred to as a user U in the drawing. The user U is an occupant of the vehicle 1 and may be a driver. An example of information stored in the storage unit 28 of the vehicle 1 is a program 281. The program 281 is a content presentation program (application software) that causes the vehicle control system 11 to execute processing related to presentation of content described below.

The server device 9 includes a communication unit 91, a processing unit 92, and a storage unit 93. The communication unit 91 communicates with another device, represented by the communication unit 22 of the vehicle control system 11 of the vehicle 1 in this example. The processing unit 92 functions as a control unit that controls the entire server device 9 and executes various types of processing. Examples of information stored in the storage unit 93 include a program 931 and the tour DB 932. The program 931 is a content presentation program that causes the server device 9 to execute processing related to presentation of content described below. The tour DB 932 is a database in which tours are registered. The tour will be described.

The tour is a tour including movement of the vehicle 1, more specifically, movement of the user U by the vehicle 1. Examples of the tour include a tourist tour to visit a tourist spot in a specific region. Various conditions and content are set for the tour, and when the conditions are achieved, the corresponding content is presented to the user U. The presentation may be construed as various meanings such as output, display, and reproduction.

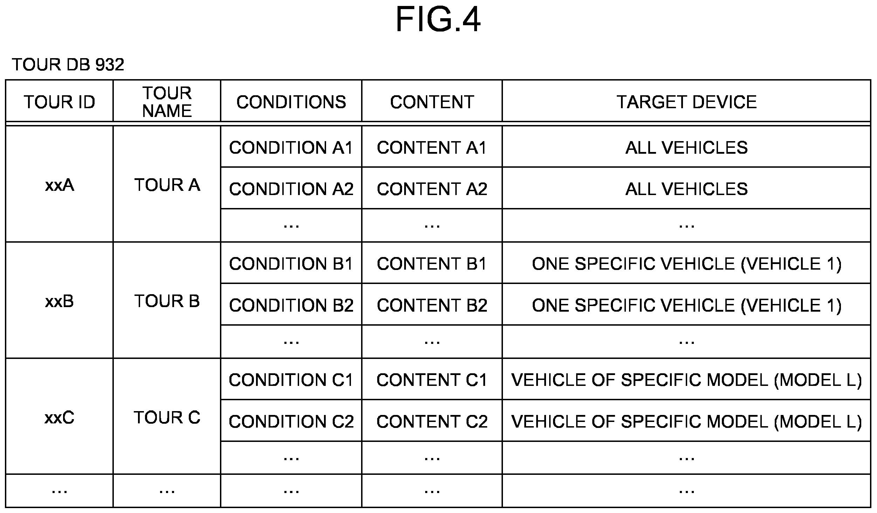

The various sensors of the vehicle control system 11 mounted on the vehicle 1 described above are used to achieve conditions constituting the tour. When a condition is achieved, the HMI 31 of the vehicle control system 11 mounted on the vehicle 1 presents content corresponding to the condition. Various trips are produced in advance and registered in the tour DB 932. This will be described with reference to FIG. 4.

FIG. 4 is a diagram illustrating an example of the tour DB 932. In this example, the tour DB 932 describes a tour ID, a tour name, a condition, content, and a target device in association with each other. The tour ID uniquely identifies the tour and is schematically indicated as xxA or the like. The tour name indicates the name of the tour and is schematically illustrated as tour A or the like.

The condition is a condition (presentation condition) for presenting the content, and is schematically illustrated as condition A1 or the like. The content is content presented when a condition is satisfied, and is schematically illustrated as Content A1 or the like. Specific examples of the condition and the content will be described below.

Target device indicates a device that can be a target of the tour, more specifically, a device that can satisfy the condition or present the content. The target device can be, for example, all vehicles, one specific vehicle, or a vehicle of a specific model. When the specific vehicle is all vehicles, the target device may be any vehicle. When the target device is one specific vehicle, the target device is limited to the one vehicle (the vehicle 1 in this example). When the target device is a vehicle of a specific model, the target device is limited to the vehicle of the specific model (in this example, the vehicle of model L). Note that the device is associated with the tour because conditions that can be achieved, content that can be presented, a presentation mode, and the like can vary depending on the device.

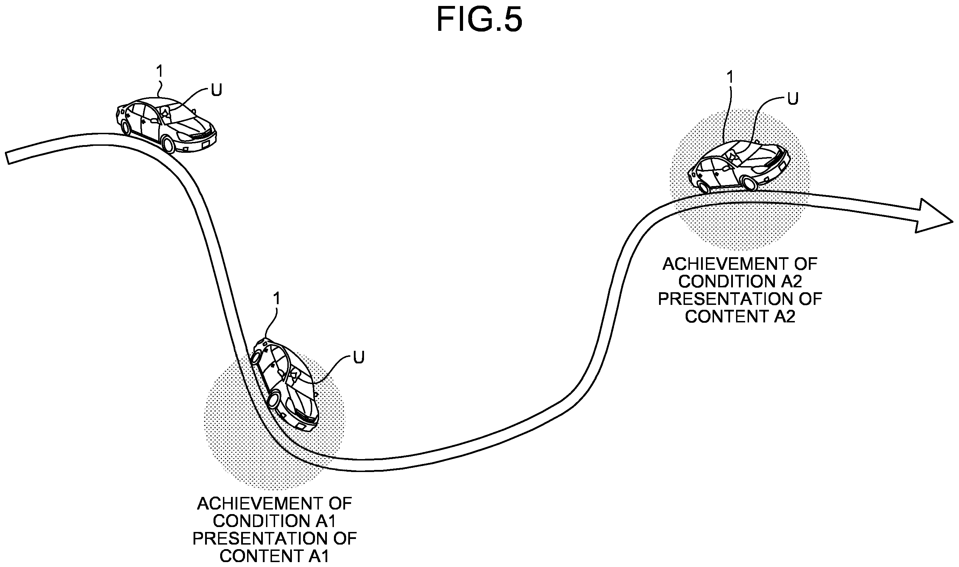

For example, the storage unit 93 stores a material DB 933 in which materials of content used for various touring as described above are registered. The storage unit 93 also stores the content included in the tour. The material DB 933 will be described below. Tour A will be described as an example of the tour with reference to FIG. 5.

FIG. 5 is a diagram schematically illustrating tour A. The user U moves with the vehicle 1 along the path indicated by an outlined arrow. In the middle of tour A, condition A1 is achieved, and content A1 is presented. In addition, Condition A2 is achieved, and content A2 is presented. For example, in this manner, as tour A progresses, various conditions are achieved, and content corresponding to each achieved condition is presented.

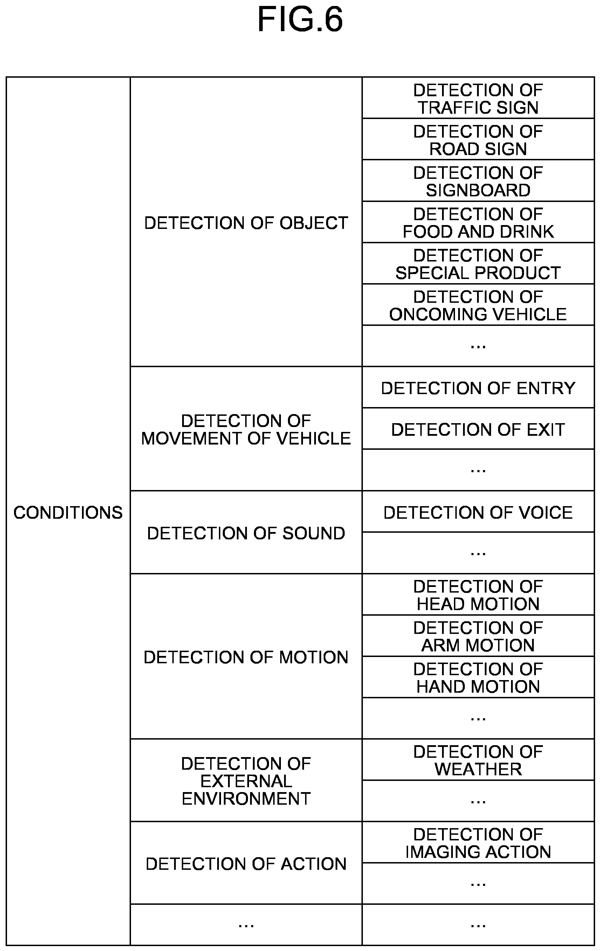

The conditions will be specifically described. Various conditions that can be achieved using various sensors of the vehicle control system 11 mounted on the vehicle 1 are set. This will be described with reference to FIG. 6.

FIG. 6 is a diagram illustrating an example of conditions. Examples of the conditions include detection of an object, detection of movement of a vehicle, detection of a sound, detection of motion, detection of an external environment, and detection of an action. The detection may be construed as including analysis by the analysis unit 61 of the vehicle control system 11 of the vehicle 1, for example, and more specifically, estimation by the self-position estimation unit 71, recognition by the recognition unit 73, and the like. Detection, estimation, recognition, and the like may be appropriately interchanged within a range without contradiction.

Examples of object detection include detection of a traffic sign, detection of a road sign, detection of a signboard, detection of general consumer goods, detection of food and drink, detection of a special product, and detection of an oncoming vehicle. Note that the detection of articles such as general consumer goods, food and drink, and special products is not limited to the detection of the shape of the article itself, and may be detection via various codes (one-dimensional code, two-dimensional code, AR marker, and the like) in addition to designs and marks such as character strings, logos, patterns, and colors attached to the article itself and packaging. The detection of the oncoming vehicle may be detection of a vehicle type of the oncoming vehicle, detection of information indicated on a license plate, or the like. Such object detection is performed using, for example, the external recognition sensor 25, the in-vehicle sensor 26, and the like of the vehicle control system 11.

An example of detection of movement of the vehicle is detection of entry and detection of exit. The entry indicates entry of the vehicle 1 into a specific region. The exit indicates exit of the vehicle 1 from a specific region. Such detection of the movement of the vehicle is performed using a detector such as the position information acquisition unit 24 (position sensor) of the vehicle control system 11, for example.

An example of sound detection is voice detection. The voice may be a voice of the user U or another voice. Such sound detection is performed using a device such as an in-vehicle sensor 26 of the vehicle control system 11, for example.

Examples of motion detection include detection of head motion, detection of arm motion, and detection of hand motion. The motion may be a motion of the user U or a motion of a person other than the user U. Such motion detection is performed using a device such as the in-vehicle sensor 26 of the vehicle 1, for example.

An example of detection of the external environment is detection of weather. Such detection of the external environment is performed using a device such as the external recognition sensor 25 of the vehicle 1, for example.

An example of detection of an action is detection of an imaging action. For example, the HMI 31 has a button (button sensor) for starting imaging, and when the user U presses the button, the HMI 31 detects an imaging action.

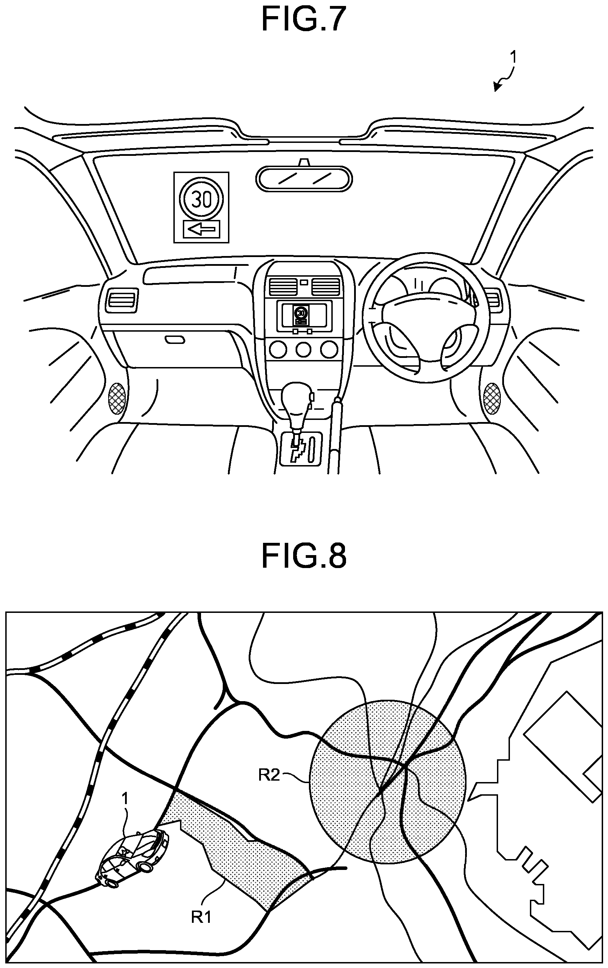

Some examples of achievement of conditions as described above will be described with reference to FIGS. 7 to 14.

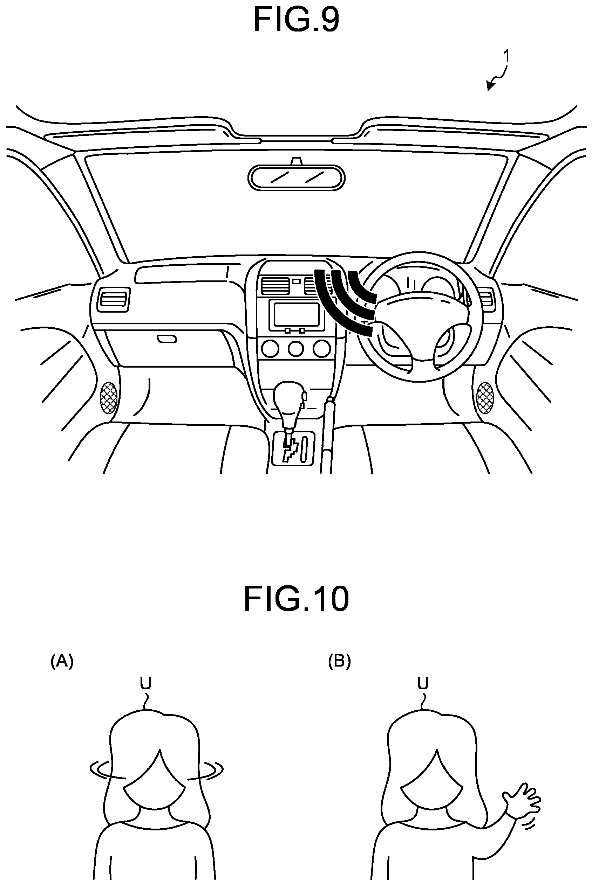

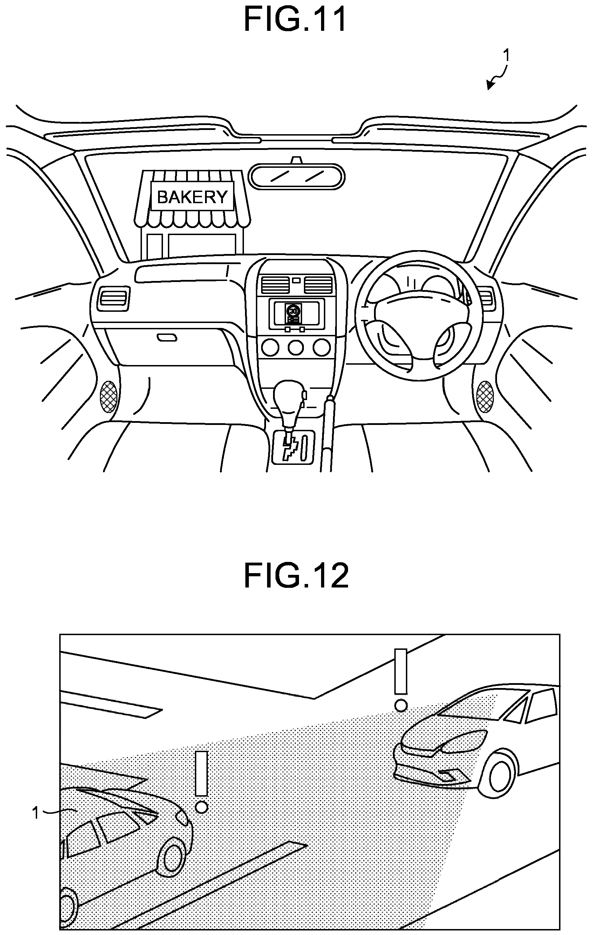

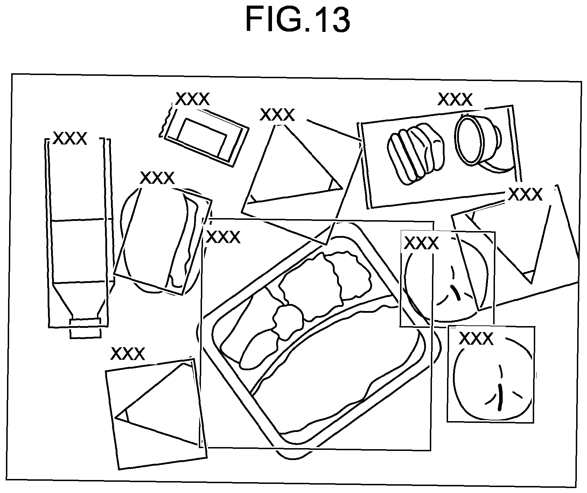

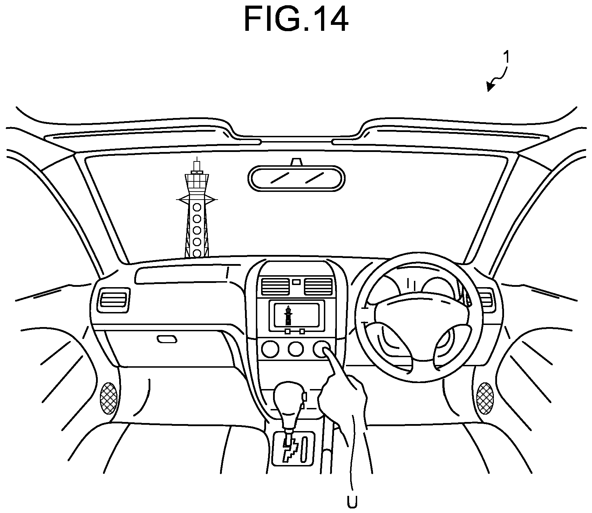

FIGS. 7 to 14 are diagrams schematically illustrating examples of achievement of conditions. In the example illustrated in FIG. 7, a traffic sign with a speed limit of 30 kilometers is detected and the condition is achieved. In the example illustrated in FIG. 8, entry of the vehicle 1 into region R1 and region R2 is detected, and the condition is achieved. In the example illustrated in FIG. 9, a sound is detected and the condition is achieved. Examples of detection of sound include a case where the user U uses their voice to answer a quiz given when the vehicle 1 enters a specific position, and recognition is made as to whether the answer is correct. In the example illustrated in (A) of FIG. 10, motion of the head of the user U is detected, and the condition is achieved. In the example illustrated in (B) of FIG. 10, motion of the hand or arm of the user U is detected, and the condition is achieved. In the example illustrated in FIG. 11, a signboard of a bakery is detected, and the condition is achieved. In the example illustrated in FIG. 12, an oncoming vehicle of the vehicle 1 is detected, and the condition is achieved. In the example illustrated in FIG. 13, various food and drink items are detected and conditions are achieved. In the example illustrated in FIG. 14, an imaging action (pressing of an imaging button) is detected, and the condition is achieved.

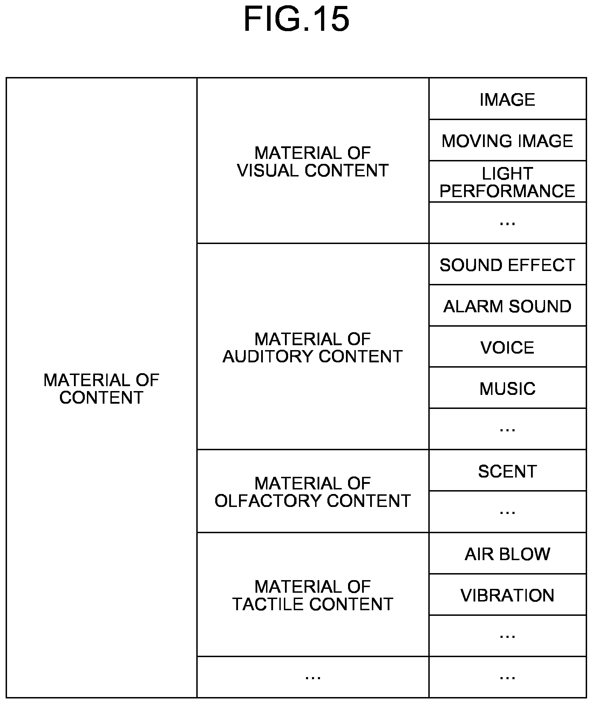

The content will be specifically described. Content setting is performed for various pieces of content that can be presented by a device such as the HMI 31 of the vehicle control system 11 mounted on the vehicle 1. The content includes one or more materials. Materials of the content will be described with reference to FIG. 15.

FIG. 15 is a diagram illustrating an example of materials of content. Examples of the material of the content include a material of visual content, a material of auditory content, a material of olfactory content, and a material of tactile content.

Examples of the material of the visual content include an image, a moving image, and a light performance. Examples of the image include a CG image, a photographic image, and an AR image. Examples of the moving image include a CG moving image, a captured moving image, and an AR moving image. Examples of the light performance include performance by light emission and performance by illumination. Examples of the material of auditory content include sound effect (including a sound mark, or a trademark of a specific sound), alarm sound, voice, and music. An example of the material of olfactory content is a scent. Examples of the material of tactile content include air blow and vibration. Such content is presented using a device such as the HMI 31 of the vehicle 1, for example.

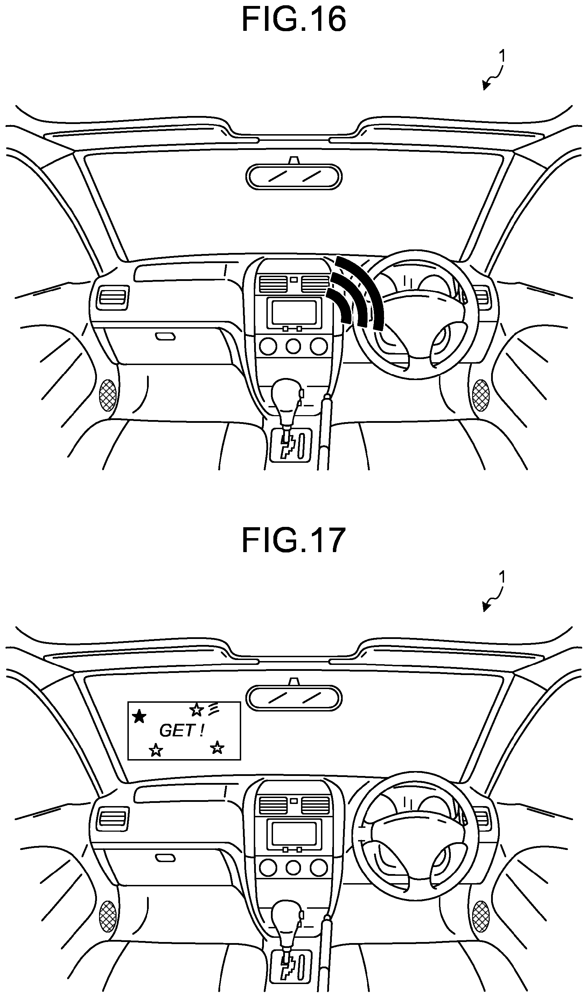

For example, content including various materials as described above is set. Some specific examples of content presentation are described with reference to FIGS. 16 to 20.

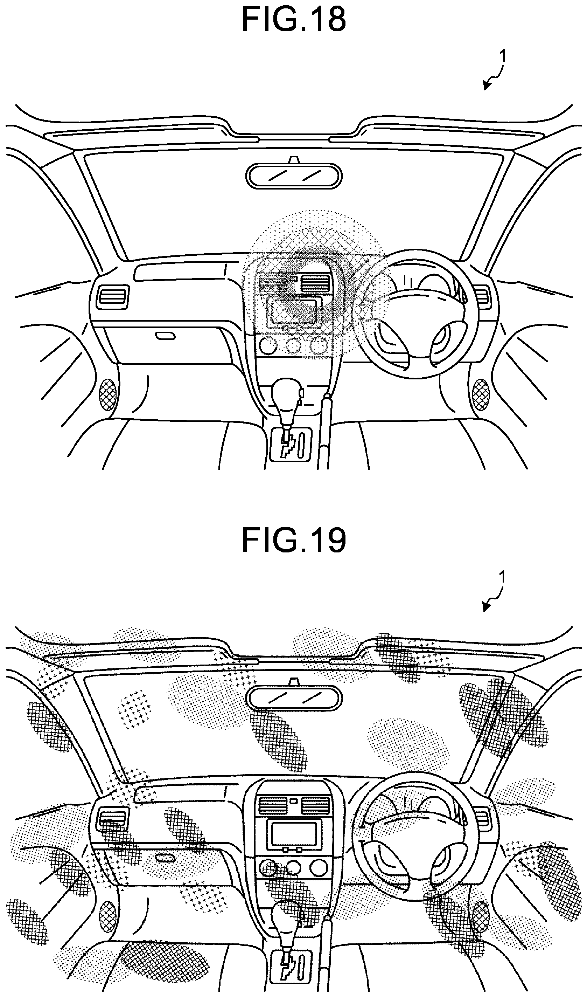

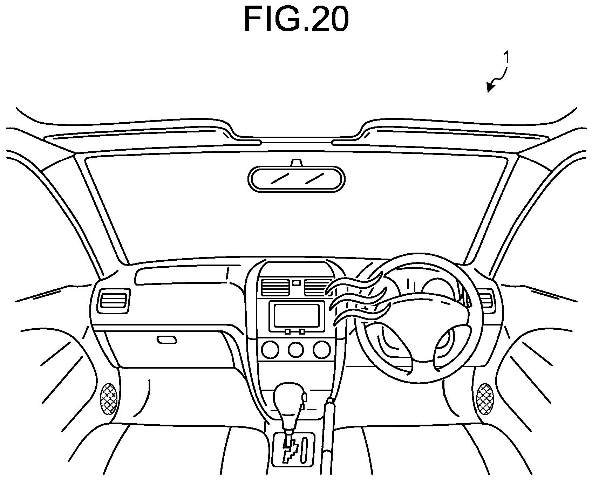

FIGS. 16 to 20 are diagrams illustrating examples of content presentation. In the example illustrated in FIG. 16, sound is output. In the example illustrated in FIG. 17, an AR image is displayed on the windshield of the vehicle 1. In the example illustrated in FIG. 18, a scent is emitted. In the example illustrated in FIG. 19, the interior of the vehicle is illuminated. In the example illustrated in FIG. 20, air is blown. The method of presentation of content is not limited to a single session of light emission, scent, vibration, or air blow. It is also allowable to perform output of a material of each content by using a pattern based on continuous and repetitive rhythmic editing, or output a plurality of materials in combination, such as using vibration combined with sound and light performance.

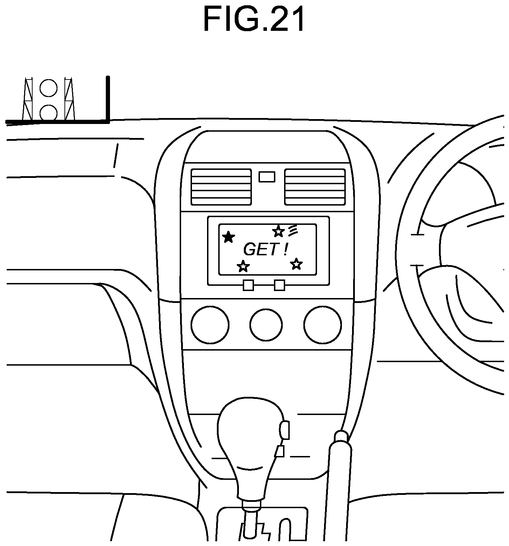

The visual content may be displayed in various regions. Some specific examples of the display region of the visual content will be described with reference to FIGS. 21 to 26.

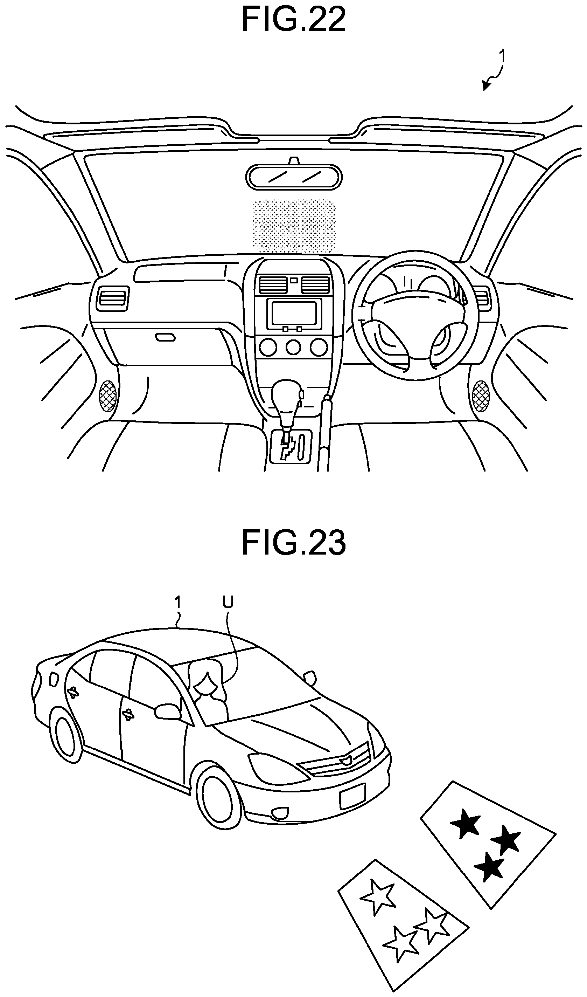

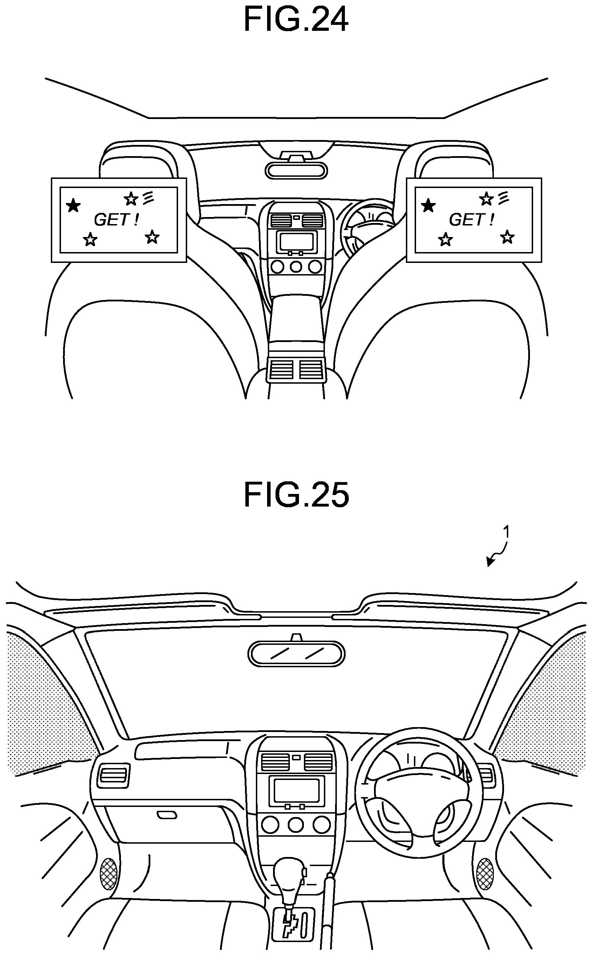

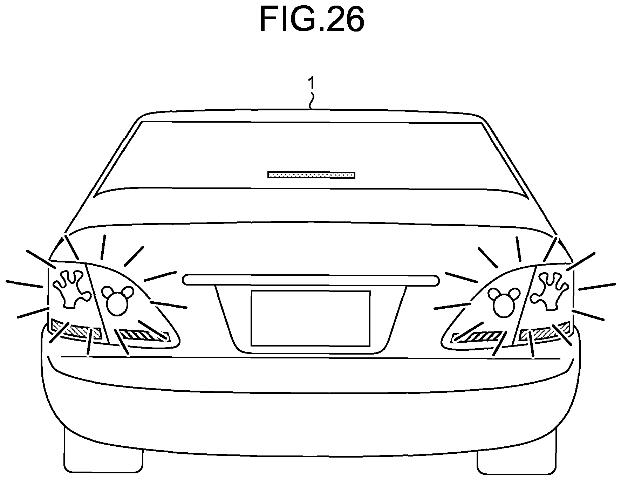

FIGS. 21 to 26 are diagrams schematically illustrating examples of display regions of visual content. In the example illustrated in FIG. 21, a navigation operation screen is used as a display region. In the example illustrated in FIG. 22, a Head-Up Display near the windshield as indicated by hatching is used as the display region. In the example illustrated in FIG. 23, the ground, more specifically, the road surface in front of the vehicle 1 is used as the display region. In the example illustrated in FIG. 24, a rear seat monitor in the vehicle is used as the display region. In the example illustrated in FIG. 25, side windows indicated by hatching are used as display regions. In the example illustrated in FIG. 26, the tail lamp of the vehicle 1 is used as the display region. In particular, in a display region such as a head-up display or a side window, the AR image may be displayed superimposed on the real space.

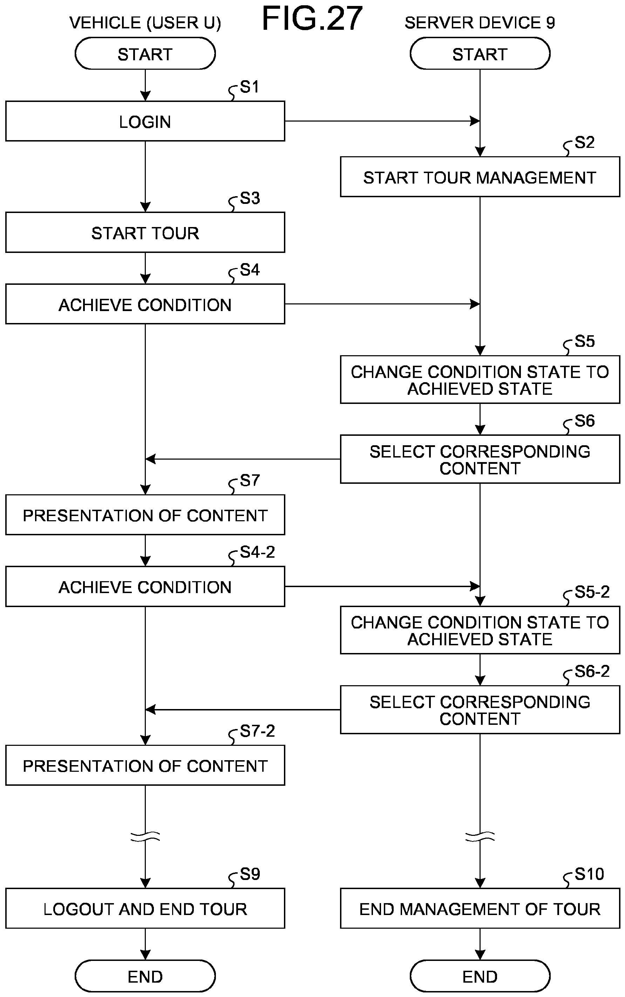

Returning to FIG. 3, for example, a tour including various types of conditions and content as described above is registered in the tour DB 932. Among these trips, an optionally selected tour including the vehicle 1 as the target device is provided to the user U. In one embodiment, the provision of the tour is performed by cooperation of the vehicle 1 and the server device 9. When a condition is achieved, the server device 9 transmits content corresponding to the condition to the vehicle 1 so as to allow the content to be presented by a device such as the HMI 31 of the vehicle control system 11 mounted on the vehicle 1. An example of a specific processing flow will be described with reference to FIG. 27.

FIG. 27 is a flowchart illustrating an example of processing (content presentation method) executed in the content presentation system 200. As a premise, it is assumed that the user U has purchased the desired tour. The method of purchase is not particularly limited, but for example, a dedicated application may be used. The application may be an application that operates on the vehicle control system 11 or an application that operates on a mobile terminal such as a smartphone carried by the user U.

In step S1, login is performed in the vehicle 1. The user U gets in the vehicle 1 and logs in to start a tour. The login may be performed by authentication of the user U. Examples of the authentication method include biometric authentication, motion authentication, or a combination of these methods. The authentication may be performed using a device such as the in-vehicle sensor 26 of the vehicle 1, or may be performed using a mobile terminal or the like carried by the user U. It is also allowable to use various other methods such as authentication using a one-dimensional code or a two-dimensional code or authentication using a beacon signal.

In step S2, the server device 9 starts a tour management. The processing unit 92 of the server device 9 starts management of the tour specified by the login in step S1 described above. The management of the tour includes management of conditions constituting the tour (condition management). The processing unit 92 manages each condition constituting the tour in either an achieved state or an unachieved state. At this time point where the tour management is started, all the conditions are in the unachieved state.

In step S3, a tour is started on the vehicle 1. For example, as described above with reference to FIG. 5, the vehicle 1 moves along the path of the tour.

In step S4, a condition is achieved in the vehicle 1. Since the achievement of the condition is as described above, the detailed description will not be repeated. In this example, information indicating that the condition has been achieved is transmitted from the vehicle 1 to the server device 9. Alternatively, detection results of various sensors in the vehicle 1 may be transmitted from the vehicle 1 to the server device 9, and the server device 9 may determine whether the condition has been achieved.

In step S5, the state of the condition is changed to the achieved state in the server device 9. The processing unit 92 changes the state of the condition achieved in the previous step S4 from the unachieved state to the achieved state.

In step S6, the corresponding content is selected in the server device 9. The processing unit 92 selects content corresponding to the condition changed to the achieved state in step S5 described above. The selected content is acquired from the storage unit 93 and transmitted from the server device 9 to the vehicle 1.

In step S7, the content is presented in the vehicle 1. The content corresponding to the condition achieved in the previous step S4 is presented to the user U. Since the presentation of the content is as described above, the detailed description will not be repeated.

The processing of steps S4 to S7 is repeatedly executed during the tour. That is, in step S4-2, in the vehicle 1, a condition different from the condition established in step S4 described above is achieved. In steps S5-2 and S6-2, in the server device 9, the state of the condition is changed to the achieved state, and the corresponding content is selected. In step S7-2, content is presented in the vehicle 1. These processes are repeatedly executed until the tour ends.

In step S9, in the vehicle 1, a logout is performed to end the tour. In step S10, the management of the tour ends in the server device 9.

As described above, for example, a tour is provided to the user U by cooperation of the vehicle 1 and the server device 9. When the condition set during the tour is achieved, the corresponding content is presented to the user U. According to the content presentation system 200, by achieving the conditions by the user U while moving in the vehicle 1, it is possible to present various types of content to the user U. The user U can experience an unprecedented new tourism.

### 3. Modifications

The disclosed technology is not limited to the above embodiments. Some modifications will be described.

### 3.1. Example of presentation of content corresponding to condition set

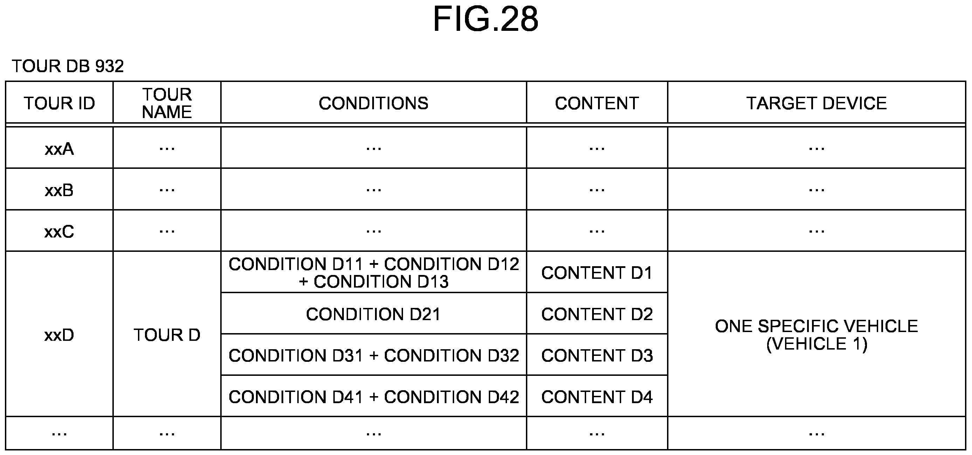

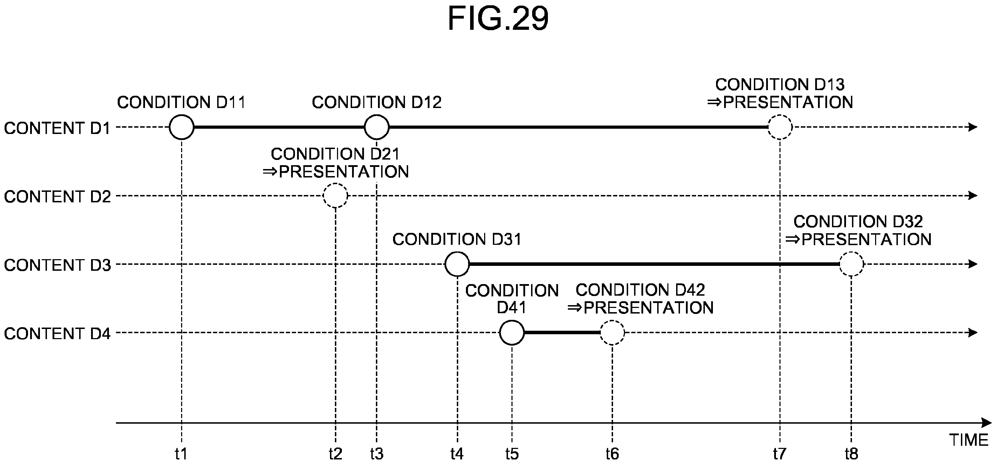

The condition corresponding to one piece of content may be a condition set including a plurality of conditions. When all of the plurality of conditions included in the condition set are achieved, corresponding content is presented. This will be described with reference to FIGS. 28 and 29.

FIG. 28 is a diagram illustrating an example of the tour DB 932. One example of the tour is tour D. Examples of the content of tour D include content D1, content D2, content D3, and content D4.

The condition corresponding to content D1 is a condition set including condition D11, condition D12, and condition D13. When all of condition D11, condition D12, and condition D13 are achieved, content D1 is presented.

The condition corresponding to content D2 is condition D21 alone. When condition D21 is achieved, content D2 is presented.

The condition corresponding to content D3 is a condition set including condition D31 and condition D32. When both condition D31 and condition D32 are achieved, content D3 is presented.

Conditions corresponding to content D4 are condition D41 and condition D42. When both condition D41 and condition D42 are achieved, content D4 is presented.

FIG. 29 is a diagram schematically illustrating tour D viewed on a time axis. The diagram illustrates timing of achievement of each condition and timing of presentation of content on the time axis. At time t1, condition D11 is achieved. At time t2, condition D21 is achieved and content D2 is presented. At time t3, condition D12 is achieved. At time t4, condition D31 is achieved. At time t5, condition D41 is achieved. At time t6, condition D42 is achieved and content D4 is presented. At time t7, condition D13 is achieved and content D1 is presented. At time t8, condition D32 is achieved and content D3 is presented.

The first condition D11 corresponding to content D1, condition D21 corresponding to content D2, the first condition D31 corresponding to content D3, and the first condition D41 corresponding to content D4 are achieved in this order. On the other hand, content D2, content D3, content D1, and content D3 are presented in this order. In this manner, the plurality of pieces of content can be presented in an order different from the order of achievement of the first condition corresponding to the content (temporally superimposed presentation). It is also possible to present content in such a mode.

### 3.2. Example of combined use of mobile terminal

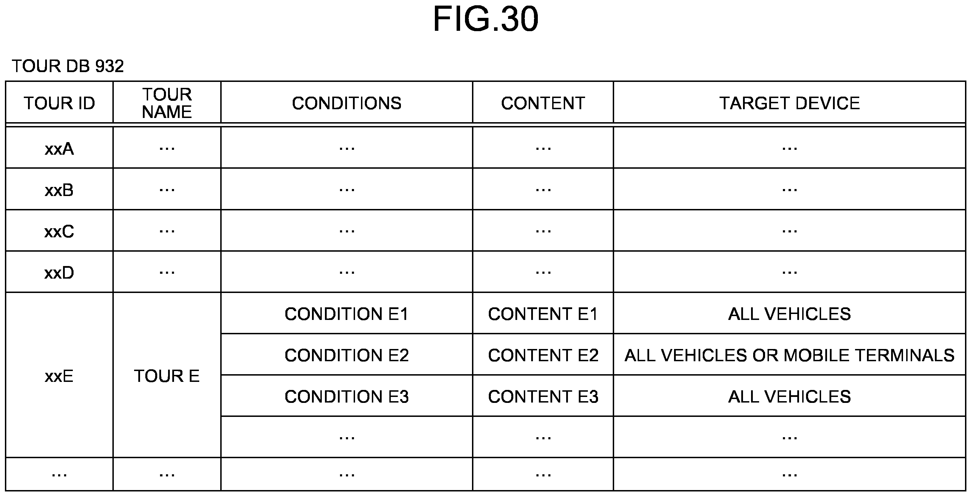

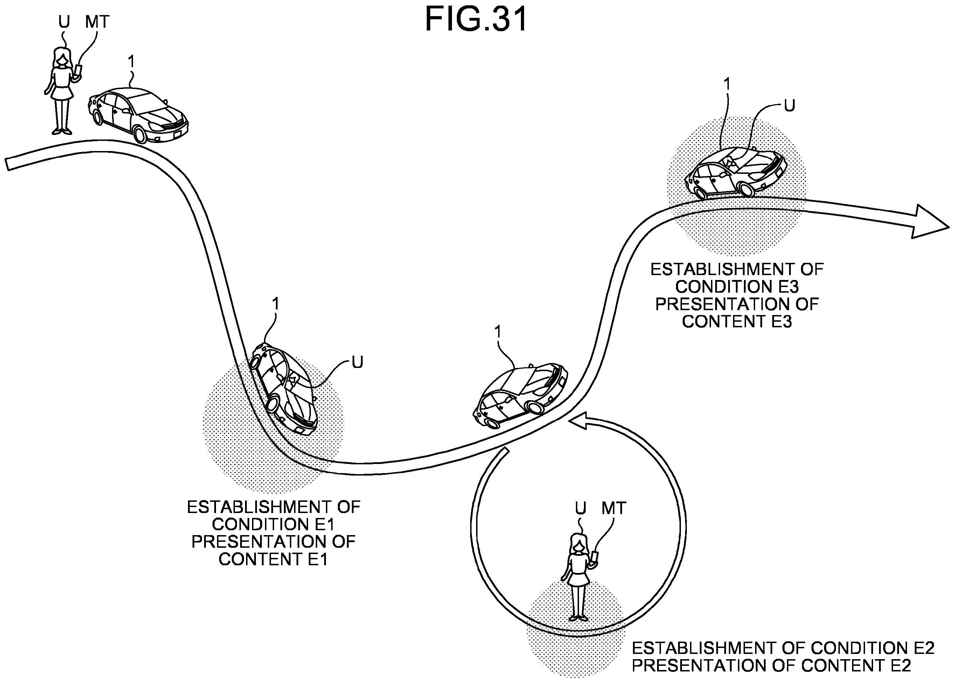

Some conditions may be achieved using a mobile terminal carried by the user U. In addition, some content may be presented by using a mobile terminal. This will be described with reference to FIGS. 30 and 31.

FIG. 30 is a diagram illustrating an example of the tour DB 932. One example of the tour is tour E. The condition includes condition E1, condition E2, and condition E3. The content includes content E1, content E2, and content E3. Among these conditions and the pieces of content, the target device associated with condition E2 and content E2 includes not only a vehicle but also a mobile terminal. That is, condition E2 can be achieved by using the vehicle 1 or by using a mobile terminal. In addition, content E2 can be presented using the vehicle 1 or can be presented using a mobile terminal.

FIG. 31 is a diagram schematically illustrating tour E. The mobile terminal carried by the user U is referred to as a mobile terminal MT. Examples of the mobile terminal MT include a smartphone, a tablet terminal, and a notebook PC.

Similarly to the vehicle 1, the mobile terminal MT can also communicate with the server device 9. The mobile terminal MT has functions similar to at least some of the functions of various sensors and the analysis unit 61 (the self-position estimation unit 71, recognition unit 73, and the like) of the vehicle control system 11 mounted on the vehicle 1. In addition, the mobile terminal MT has a function similar to at least a part of the function of the HMI 31 or the like of the vehicle control system 11 mounted on the vehicle 1. Accordingly, within the scope of the function, the mobile terminal MT can be used for achievement of the conditions and presentation of the content described above.

Specifically, in an example illustrated in FIG. 31, the user U moves in the vehicle 1 along a path indicated by an outlined arrow. First, condition E1 is achieved and content E1 is presented. Thereafter, the vehicle 1 is parked, and the user U moves together with the mobile terminal MT. Examples of the movement include walking, a bicycle, and a train. Condition E2 is achieved and content E2 is presented. The establishment of condition E2 and the presentation of content E2 are performed using the mobile terminal MT. Thereafter, the user U returns to the vehicle 1 and moves again by the vehicle 1. Condition E3 is achieved and content E3 is presented.

For example, as described above, it is possible to seamlessly perform achievement of conditions and presentation of content seamlessly between different devices, specifically between the vehicle 1 and the mobile terminal MT in the present example.

Note that a presentation mode of content corresponding to the same condition may be different between the vehicle 1 and the mobile terminal MT. The vehicle 1 often includes more types and high-performance facilities than the mobile terminal MT. In such a vehicle 1, content may be presented in a richer mode than the mobile terminal MT.

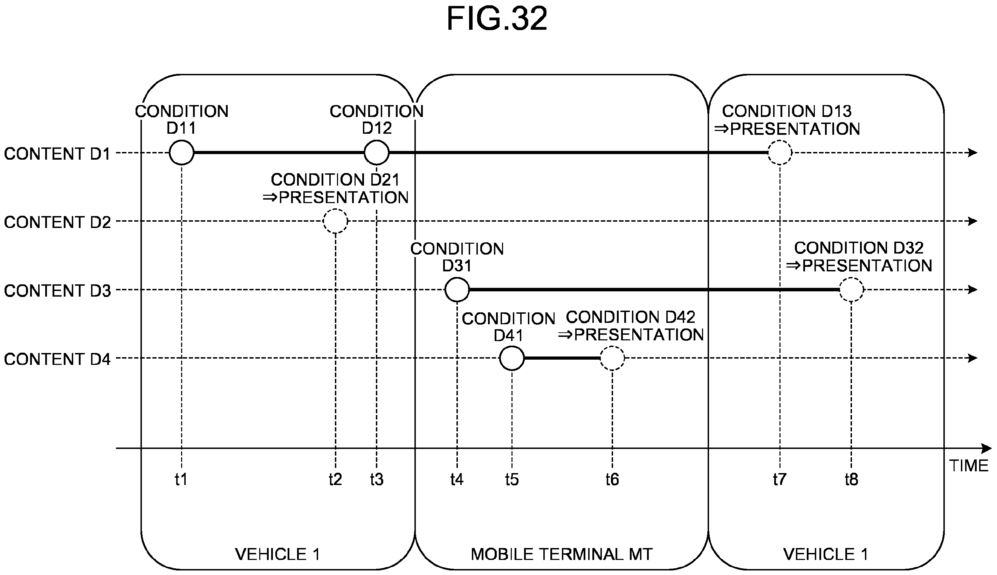

The above-described technology using the mobile terminal MT in combination can also be applied to a case where one content is associated with a condition set including a plurality of conditions, like tour D described above with reference to FIG. 29. This will be described with reference to FIG. 32.

FIG. 32 is a view schematically illustrating an example of tour D viewed on a time axis. In this example, it is assumed that the achievement of condition D31, condition D41, and condition D42 of tour D and reproduction of content D4 can be performed using the mobile terminal MT. When compared with FIG. 29 described above, there is a difference in that the achievement of the condition and the presentation of the content during time t4 to time t6 are performed using the mobile terminal MT instead of the vehicle 1. Furthermore, in this example, among condition D31 and condition D32 corresponding to content D3, condition D31 is achieved using the mobile terminal MT, and condition D32 is achieved using the vehicle 1. In this manner, it is also possible to seamlessly perform achievement of a condition and presentation of content.

### 3.3. Example of tour production

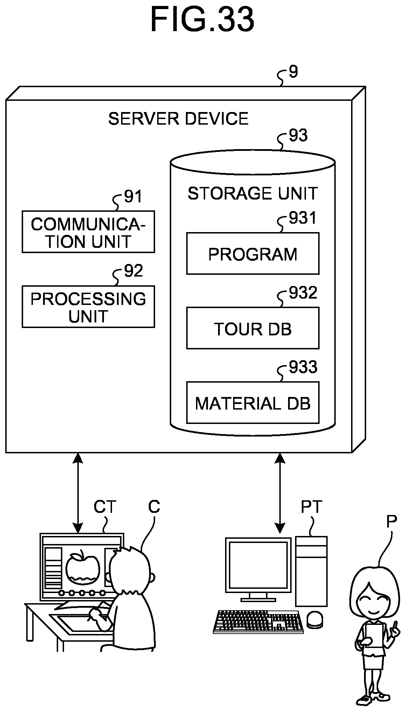

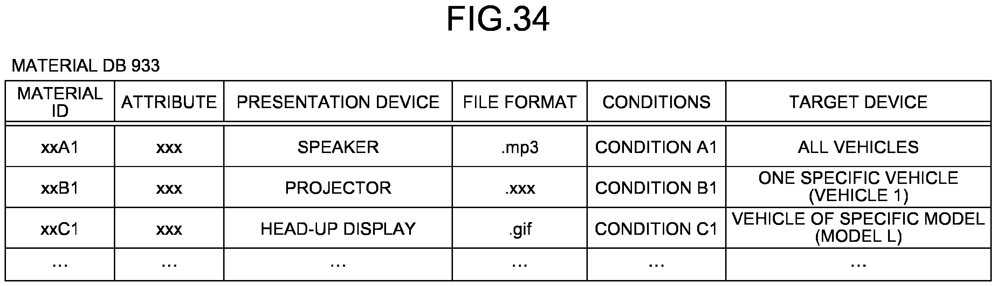

The tours described so far and the materials of the content may be produced in advance by various users and registered in the database by the server device 9. This will be described with reference to FIGS. 33 and 34.

FIG. 33 is a view illustrating an example of production of tours and materials. The storage unit 93 of the server device 9 also stores the material DB 933. Materials of various types of content that can be included in the tour are created in advance and registered in the material DB 933. This will be described with reference to FIG. 34.

FIG. 34 is a diagram illustrating an example of the material DB 933. In this example, the material DB 933 describes a material ID, an attribute, a presentation device, a file format, a condition, and a target device in association with each other. The material ID uniquely identifies the material and is schematically indicated as xxA1 or the like. The attribute indicates the type of material, for example, an image, a sound effect, or the like (also refer to FIG. 15). The presentation device indicates a device such as the HMI 31 used for presenting the content including the material, for example, a display, a speaker, or the like. The file format indicates a format of the file, and the conditions and the target device are as described above.

Returning to FIG. 33, the server device 9 can also communicate with a terminal CT and a terminal PT. A user of the terminal CT is referred to as a user C in the drawing. The user C is a material producer to be a creator of content. A user of the terminal PT is referred to as a user P in the drawing. The user P is a tour producer who combines a plurality of pieces of content to plan and edit a travel course and an itinerary. The terminal PT being a tour producer terminal and the terminal CT being a material producer terminal may also be components of the content presentation system 200. Examples of the terminal CT and the terminal PT include a PC and a tablet terminal.

The user C produces a material using the terminal CT. The material mentioned here is, for example, a sound source file in which sound effects, environmental sounds, voice, and the like are edited, a projection mapping data file in which the type and pattern of light are programmed, an image file of a character to be displayed as an AR image, and the like, and includes User Generated Contents (UGC). The produced material is transmitted from the terminal CT to the server device 9 and registered in the material DB 933 by the processing unit 92.

The user P produces a tour using the terminal PT. The produced tour is transmitted from the terminal PT to the server device 9 and registered in the tour DB 932. Here, the user P may produce a tour using the material registered in the material DB 933. In this case, material information registered in the material DB 933 is transmitted from the server device 9 to the terminal PT and presented to the user P. The user P produces a tour using a material selected from the presented materials. Note that the tour is typically, but not limited to, a complex configuration including a large number of combinations of one or a plurality of conditions and content presented in a case where these conditions are satisfied. In addition, a final destination is not necessarily set for the tour, and a series of flows of content presentation in a travel course including the vehicle constitutes the tour regardless of the presence or absence of the destination.

Materials produced by many users C are registered in the material DB 933, and a tour produced by many users P is registered in the tour DB 932. In this manner, it is possible to provide various tours.

The processing unit 92 of the server device 9 may collect information regarding the actually performed tour, for example, information such as a behavior log of the user U including the movement of the vehicle 1 and the like, and may store the collected information in the storage unit 93. Such information may be presented to the user P who is a tour producer. This makes it possible to send feedback to the tour production by the user P.

### 3.4. Others

The various sensors, HMIs, and the like used to achieve the conditions may be, for example, sensors, HMIs, and the like detachably mounted on the vehicle 1, separately from the vehicle control system 11. The sensors, the HMI, and the like may be communicable with the server device 9 without using the communication unit 22 of the vehicle control system 11.

Some functions of the server device 9, specifically some functions of the processing unit 92, for example, may be incorporated in the vehicle control system 11 of the vehicle 1. In addition, information such as content of a tour stored in the storage unit 93 of the server device 9 may be downloaded in the vehicle 1. In this case, the achievement of the condition and the presentation of the content may be completed in the vehicle 1. It is also possible to eliminate the necessity of communication between the vehicle 1 on the tour and the server device 9.

### 4. Hardware configuration example

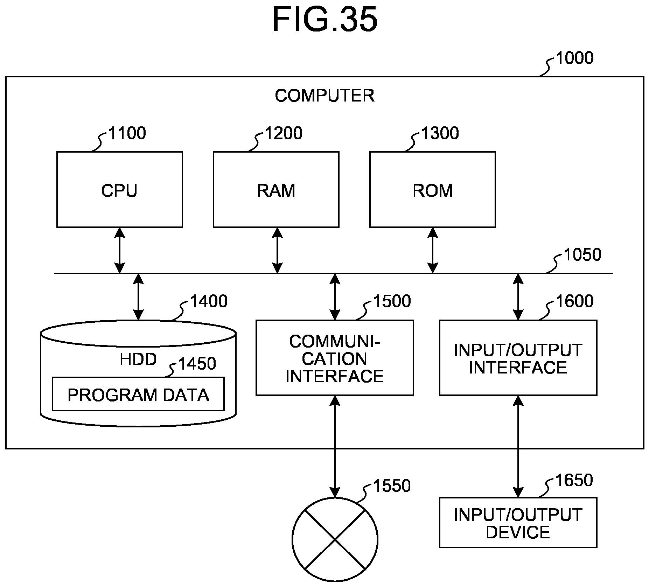

FIG. 35 is a diagram illustrating an example of a hardware configuration of the device. The server device 9, the mobile terminal MT, the terminal CT, and the terminal PT described above are implemented by a computer 1000 in the illustration, for example.

The computer 1000 includes a CPU 1100, RAM 1200, ROM 1300, storage 1400, a communication interface 1500, and an input/output interface 1600. Individual components of the computer 1000 are interconnected by a bus 1050.

The CPU 1100 operates based on a program stored in the ROM 1300 or the storage 1400 so as to control each component. For example, the CPU 1100 develops a program stored in the ROM 1300 or the storage 1400 in the RAM 1200, and executes processing corresponding to various programs.

The ROM 1300 stores a boot program such as a basic input output system (BIOS) executed by the CPU 1100 when the computer 1000 starts up, a program dependent on hardware of the computer 1000, or the like.

The storage 1400 is a non-transitory computer-readable recording medium that records a program executed by the CPU 1100, data used by the program, or the like. Specifically, the storage 1400 is a recording medium that records an information processing program (such as the program 281 and the program 931) according to the present disclosure, which is an example of program data 1450.

The communication interface 1500 is an interface for connecting the computer 1000 to an external network 1550. For example, the CPU 1100 receives data from other devices or transmits data generated by the CPU 1100 to other devices via the communication interface 1500.

The input/output interface 1600 is an interface for connecting an input/output device 1650 with the computer 1000. For example, the CPU 1100 can receive data from an input device such as a keyboard and a mouse via the input/output interface 1600. In addition, the CPU 1100 transmits data to an output device such as a display, a speaker, or a printer via the input/output interface 1600. Furthermore, the input/output interface 1600 may function as a media interface for reading a program or the like recorded on a predetermined recording medium. Examples of the media include optical recording media such as a digital versatile disc (DVD) or a phase change rewritable disk (PD), a magneto-optical recording medium such as a magneto-optical disk (MO), a tape medium, a magnetic recording medium, and semiconductor memory.

In a case where the computer 1000 functions as the server device 9 according to the embodiment of the present disclosure, for example, the communication interface 1500 implements the function of the communication unit 91. The CPU 1100 implements the functions of the processing unit 92. The storage 1400 implements the function of the storage unit 93. While the CPU 1100 executes program data 1450 read from the storage 1400, the CPU 1100 may acquire these programs from another device via the external network 1550, as another example.

### 5. Exemplary effects

The technology described above is specified as follows, for example. One of the disclosed technologies is the content presentation system 200. As described with reference to FIGS. 1 to 27 and the like, the content presentation system 200 includes: a sensor (for example, the external recognition sensor 25 and the like) mounted on the vehicle 1 and adapted to achieve a condition constituting a tour including movement of the vehicle; and the HMI 31 that is mounted on the vehicle 1 and presents content corresponding to the condition when the condition is achieved. According to content presentation system 200, it is possible to present content in an unprecedented new mode.

As described with reference to FIGS. 6 to 14 and the like, the condition may include at least one of detection of an object, detection of movement of the vehicle 1, detection of sound, detection of motion, detection of an external environment, or detection of an action. The detection of the object may include at least one of detection of a traffic sign, detection of a road sign, detection of a signboard, detection of a shape, a pattern, or a color of an article, detection of a mark or a code attached to the article itself or the packaging of the article, or detection of an oncoming vehicle. Detection of movement of the vehicle 1 may include at least one of entry of the vehicle 1 into a specific region or exit of the vehicle 1 from a specific region. By setting such various conditions, for example, content can be presented in various modes.

As described with reference to FIGS. 15 to 26 and the like, the content may include at least one of visual content, auditory content, olfactory content, or tactile content. The visual content may include at least one of an image, a moving image, or a light performance. The auditory content may include at least one of a sound effect, an alarm sound, a voice, or music. The olfactory content may include a scent. The tactile content may include at least one of air blow or vibration. In addition, the content corresponding to the condition may be presented in a continuous and repetitive rhythmic pattern. Various types of content like these can be presented.

As described with reference to FIGS. 28 and 29 and the like, the condition may include a condition set (for example, condition D11, condition D12, condition D13, and the like) including a plurality of conditions, the content may include content corresponding to the condition set (for example, content D1 and the like), and the HMI 31 may present the content corresponding to the condition set when all the conditions included in the condition set are achieved. It is also possible to present content in such a mode.

As described with reference to FIG. 3 and the like, the content presentation system 200 may include the server device 9, which is communicable with the vehicle 1 and includes the storage unit 93 storing the content, and the server device 9 may transmit the content to the vehicle 1 such that, when the condition is achieved, the content corresponding to the condition is presented by the HMI 31. For example, the content can be presented by cooperation between the vehicle 1 and the server device 9 as described above.

A content presentation program such as the program 281 or the program 931 described with reference to FIGS. 1 to 27, 34, and the like is also one of the disclosed technologies. The content presentation program causes the computer 1000 to execute processing of causing the HMI 31 to present, when a condition is achieved based on a detection result of a sensor (for example, the external recognition sensor 25 or the like), which is mounted on the vehicle 1 and adapted to achieve the condition constituting a tour including movement of the vehicle, content corresponding to the condition. Such a content presentation program also enables content presentation in a new mode as described above.

The content presentation method described with reference to FIG. 27 and the like is also one of the disclosed technologies. The content presentation method includes steps (steps S4 to S7) of causing the HMI 31 to present, when a condition is achieved based on a detection result of a sensor (for example, the external recognition sensor 25 or the like), which is mounted on the vehicle 1 and adapted to achieve the condition constituting a tour including movement of the vehicle 1, content corresponding to the condition. Also, by such a content presentation method, as described above, content presentation in a new mode can be performed.

Note that the effects described in the present disclosure are merely examples and are not limited to the disclosed contents. There may be other effects.

The embodiments of the present disclosure have been described above. However, the technical scope of the present disclosure is not limited to the above-described embodiments, and various modifications can be made without departing from the scope of the present disclosure. Moreover, it is allowable to combine the components across different embodiments and modifications as appropriate.

Note that the present technology can also have the following configurations.
(1) A content presentation system comprising:
   a sensor mounted on a vehicle and adapted to achieve a condition constituting a tour including movement of the vehicle; and
   a human machine interface (HMI) mounted on the vehicle and configured to present content corresponding to the condition when the condition is achieved.
(2) The content presentation system according to (1), wherein
   the condition includes at least one of detection of an object, detection of movement of the vehicle, detection of a sound, detection of motion, detection of an external environment, or detection of an action.
(3) The content presentation system according to (2), wherein
   the detection of the object includes at least one of detection of a traffic sign, detection of a road sign, detection of a signboard, detection of a shape, a pattern, or a color of an article, detection of a mark or a code attached to the article itself or packaging of the article, or detection of an oncoming vehicle.
(4) The content presentation system according to (2) or (3), wherein
   the detection of movement of the vehicle includes at least one of entry of the vehicle into a specific region or exit of the vehicle from a specific region.
(5) The content presentation system according to any one of (1) to (4), wherein
   the content includes at least one of visual content, auditory content, olfactory content, or tactile content.
(6) The content presentation system according to (5), wherein
   the visual content includes at least one of an image, a moving image, or a light performance.
(7) The content presentation system according to (5) or (6), wherein
   the auditory content includes at least one of a sound effect, an alarm sound, a voice, or music.
(8) The content presentation system according to any one of (5) to (7), wherein
   the olfactory content includes a scent.
(9) The content presentation system according to any one of (5) to (8), wherein
   the tactile content includes at least one of air blow or vibration.
(10) The content presentation system according to any one of (5) to (9), wherein
   the content corresponding to the condition is presented in a continuous and repetitive rhythmic pattern.
(11) The content presentation system according to any one of (1) to (10), wherein
   the condition includes a condition set including a plurality of conditions,
   the content includes content corresponding to the condition set, and
   the HMI presents content corresponding to the condition set when all conditions included in the condition set are achieved.
(12) The content presentation system according to any one of (1) to (11), further comprising
   a server device being communicable with the vehicle and including a storage unit storing the content, wherein
   the server device transmits the content to the vehicle in such a manner that, when the condition is achieved, the content corresponding to the condition is to be presented by the HMI.
(13) A content presentation program causing a computer to execute
   processing of causing an HMI to present, when a condition is achieved based on a detection result of a sensor mounted on a vehicle and adapted to achieve the condition constituting a tour including movement of the vehicle, content corresponding to the condition.
(14) A content presentation method comprising
   causing an HMI to present, when a condition is achieved based on a detection result of a sensor mounted on a vehicle and adapted to achieve the condition constituting a tour including movement of the vehicle, content corresponding to the condition.

### Reference Signs List

200 CONTENT PRESENTATION SYSTEM
1 VEHICLE
11 VEHICLE CONTROL SYSTEM
21 VEHICLE CONTROL ECU
22 COMMUNICATION UNIT
23 MAP INFORMATION ACCUMULATION UNIT
24 POSITION INFORMATION ACQUISITION UNIT
25 EXTERNAL RECOGNITION SENSOR
26 IN-VEHICLE SENSOR
27 VEHICLE SENSOR
28 STORAGE UNIT
29 TRAVEL ASSISTANCE/AUTOMATED DRIVING CONTROLLER
30 DMS
31 HMI
32 VEHICLE CONTROLLER
41 COMMUNICATION NETWORK
51 CAMERA
52 RADAR
53 LiDAR
54 ULTRASONIC SENSOR
61 ANALYSIS UNIT
62 ACTION PLANNING UNIT
63 OPERATION CONTROLLER
71 SELF-POSITION ESTIMATION UNIT
72 SENSOR FUSION UNIT
73 RECOGNITION UNIT
81 STEERING CONTROLLER
82 BRAKE CONTROLLER
83 DRIVE CONTROLLER
84 BODY SYSTEM CONTROLLER
85 LIGHT CONTROLLER
86 HORN CONTROLLER
9 SERVER DEVICE
91 COMMUNICATION UNIT
92 PROCESSING UNIT
93 STORAGE UNIT
931 PROGRAM
932 TOUR DB
933 MATERIAL DB
CT TERMINAL
MT MOBILE TERMINAL
PT TERMINAL
101F SENSING REGION
102F SENSING REGION
103F SENSING REGION
104 SENSING REGION
105 SENSING REGION
101B SENSING REGION
102B SENSING REGION
103B SENSING REGION
102R SENSING REGION
103R SENSING REGION
102L SENSING REGION
103L SENSING REGION
1000 COMPUTER
1050 BUS
1100 CPU
1200 RAM
1300 ROM
1400 STORAGE
1450 PROGRAM DATA
1500 COMMUNICATION INTERFACE
1550 EXTERNAL NETWORK
1600 INPUT/OUTPUT INTERFACE
1650 INPUT/OUTPUT DEVICE

## Claims

1. A content presentation system comprising:
a sensor mounted on a vehicle and adapted to achieve a condition constituting a tour including movement of the vehicle; and
a human machine interface (HMI) mounted on the vehicle and configured to present content corresponding to the condition when the condition is achieved.

2. The content presentation system according to claim 1, wherein
the condition includes at least one of detection of an object, detection of movement of the vehicle, detection of a sound, detection of motion, detection of an external environment, or detection of an action.

3. The content presentation system according to claim 2, wherein
the detection of the object includes at least one of detection of a traffic sign, detection of a road sign, detection of a signboard, detection of a shape, a pattern, or a color of an article, detection of a mark or a code attached to the article itself or packaging of the article, or detection of an oncoming vehicle.

4. The content presentation system according to claim 2, wherein
the detection of movement of the vehicle includes at least one of entry of the vehicle into a specific region or exit of the vehicle from a specific region.

5. The content presentation system according to claim 1, wherein
the content includes at least one of visual content, auditory content, olfactory content, or tactile content.

6. The content presentation system according to claim 5, wherein
the visual content includes at least one of an image, a moving image, or a light performance.

7. The content presentation system according to claim 5, wherein
the auditory content includes at least one of a sound effect, an alarm sound, a voice, or music.

8. The content presentation system according to claim 5, wherein
the olfactory content includes a scent.

9. The content presentation system according to claim 5, wherein
the tactile content includes at least one of air blow or vibration.

10. The content presentation system according to claim 5, wherein
the content corresponding to the condition is presented in a continuous and repetitive rhythmic pattern.

11. The content presentation system according to claim 1, wherein
the condition includes a condition set including a plurality of conditions,
the content includes content corresponding to the condition set, and
the HMI presents content corresponding to the condition set when all conditions included in the condition set are achieved.

12. The content presentation system according to claim 1, further comprising
a server device being communicable with the vehicle and including a storage unit storing the content, wherein
the server device transmits the content to the vehicle in such a manner that, when the condition is achieved, the content corresponding to the condition is to be presented by the HMI.

13. A content presentation program causing a computer to execute
processing of causing an HMI to present, when a condition is achieved based on a detection result of a sensor mounted on a vehicle and adapted to achieve the condition constituting a tour including movement of the vehicle, content corresponding to the condition.

14. A content presentation method comprising
causing an HMI to present, when a condition is achieved based on a detection result of a sensor mounted on a vehicle and adapted to achieve the condition constituting a tour including movement of the vehicle, content corresponding to the condition.
